# EUROPÄISCHE PATENTSCHRIFT

(11) **EP 2 676 318 B1**
(45) Veröffentlichungstag und Bekanntmachung des Hinweises auf die Patenterteilung: **27.04.2016**
(21) Anmeldenummer: 12706222.2
(22) Anmeldetag: 14.02.2012
(51) Int. Cl.: C23C 28/04, C23C 24/08, H01M 8/02, H01M 8/12, C23C 24/10, B32B 18/00, C04B 35/01, C01G 45/00, C01G 53/00

(54) **SCHICHTAUFBAU SOWIE SEINE VERWENDUNG ZUR AUSBILDUNG EINES KERAMISCHEN SCHICHTAUFBAUS ZWISCHEN EINEM INTERKONNEKTOR UND EINER KATHODE EINER HOCHTEMPERATURBRENNSTOFFZELLE**
LAYERED STRUCTURE AND USE THEREOF TO FORM A CERAMIC LAYERED STRUCTURE BETWEEN AN INTERCONNECT AND A CATHODE OF A HIGH-TEMPERATURE FUEL CELL
STRUCTURE À EMPILEMENT ET SON UTILISATION POUR FORMER UNE STRUCTURE À EMPILEMENT EN CERAMIQUE ENTRE UN INTERCONNECTEUR ET UNE CATHODE D'UNE PILE A COMBUSTIBLE HAUTE TEMPERATURE

(30) Priorität: 15.02.2011 EP 11001220
(43) Veröffentlichungstag der Anmeldung: 25.12.2013
(73) Patentinhaber: Plansee SE, 6600 Reutte / Tirol (AT); Fraunhofer-Gesellschaft zur Förderung der angewandten Forschung e.V., 80686 München (DE)
(72) Erfinder: BRANDNER, Marco, 87466 Oy-Mittelberg (DE); SCHMID, Johannes, A-6600 Lechaschau (AT); VENSKUTONIS, Andreas, 6600 Reutte/ AT (AT); TROFIMENKO, Nikolai, 01069 Dresden (DE); SAUCHUK, Viktar, 01069 Dresden (DE); KUSNEZOFF, Mihails, 01217 Dresden (DE); LUCKE, Karin, 01217 Dresden (DE); MICHAELIS, Alexander, 01217 Dresden (DE)
(74) Vertreter: Pfenning, Meinig & Partner mbB
(86) Internationale Anmeldenummer: PCT/EP2012/052518
(87) Internationale Veröffentlichungsnummer: WO 2012/110516

(56) Entgegenhaltungen:
- EP-A2- 0 866 472
- WO-A1-2010/087298
- WO-A1-2011/048307
- DE-A1- 10 150 248
- DE-A1-102007 018 261
- US-A1- 2009 155 667
- MONTERO X ET AL: "Development and characterization of a quasi-ternary diagram based on La0.8Sr0.2(Co,Cu,Fe)O3 oxides in view of application as a cathode contact material for solid oxide fuel cells", SOLID STATE IONICS, NORTH HOLLAND PUB. COMPANY. AMSTERDAM; NL, NL, Bd. 180, Nr. 9-10, 29. Mai 2009 (2009-05-29), Seiten 731-737, XP026097616, ISSN: 0167-2738, DOI: 10.1016/J.SSI.2009.03.006 [gefunden am 2009-04-05]
- KUSNEZOFF M ET AL: "Impact of protective and contacting layers on the long-term SOFC operation", CERAMIC ENGINEERING AND SCIENCE PROCEEDINGS - ADVANCES IN SOLID OXIDE FUEL CELLS V - A COLLECTION OF PAPERS PRESENTED AT THE 33RD INTERNATIONAL CONFERENCE ON ADVANCED CERAMICS AND COMPOSITES 2010 AMERICAN CERAMIC SOCIETY USA, Bd. 30, Nr. 4, 18. Januar 2009 (2009-01-18), Seiten 83-93, XP008137657,
- BRYLEWSKI T ET AL: "Perovskite and spinel functional coatings for SOFC metallic interconnects", MATERIALS SCIENCE FORUM, TRANS TECH PUBLICATIONS LTD- SWITZERLAND, CH, Bd. 595-598, Nr. Part 2, 1. Januar 2008 (2008-01-01), Seiten 813-822, XP008137667, ISSN: 0255-5476 in der Anmeldung erwähnt

## Beschreibung

Die Erfindung betrifft einen Schichtaufbau, der zwischen einem Interkonnektor und einer Kathode einer Hochtemperaturbrennstoffzelle ausgebildet ist und zur Ausbildung eines keramischen Schichtaufbaus zwischen einem Interkonnektor und einer Kathode verwendet werden kann.

Hochtemperaturbrennstoffzellen (SOFC: Solid Oxide Fuel Cell) ermöglichen eine direkte Umwandlung von chemischer Energie in elektrische Energie. Eine zentrale Funktionseinheit solcher Hochtemperaturbrennstoffzellen ist die Kathoden-Elektrolyt-Anoden-Einheit (Einzelzelle). Diese weist zwei Elektroden, die Kathode und die Anode, auf, die durch einen sauerstoffleitenden (Feststoff-)Elektrolyt voneinander getrennt sind. Im Einsatz solch einer Einzelzelle wird der Anode Brennstoff (z.B. H₂, CH₄, CO, etc.) und der Kathode ein Oxidationsmittel (z.B. O₂, Luft, etc.) zugeführt. Bei einer Betriebstemperatur im Bereich von 650 bis 1.000 °C werden Sauerstoffionen von der Kathodenseite durch den sauerstoffleitenden Elektrolyten hindurch zu der Anode geleitet, wo sie mit dem Brennstoff reagieren. Die elektrische Spannung, die sich dabei zwischen Anode und Kathode aufbaut, wird als elektrische Energie genutzt. Um durch eine Hochtemperaturbrennstoffzelle ein ausreichend hohes, elektrisches Spannungsniveau zu erreichen, werden in der Regel mehrere Kathoden-Elektrolyt-Anoden-Einheiten (Einzelzellen) in Serie zueinander geschaltet. Hierzu werden Interkonnektoren bzw. Bipolarplatten eingesetzt, die das Verbindungsglied zwischen den Einzelzellen bilden. Bei der planaren Bauform sind die Einzelzellen (einschließlich der Kathode, des Elektrolyts und der Anode) sowie die Interkonnektoren jeweils im Wesentlichen plattenförmig ausgebildet. Die Interkonnektoren bewerkstelligen die elektrische Kontaktierung sowie die Gaszuführung von Brennstoff zu der Anode und von Oxidationsmittel zu der Kathode. Neben der planaren Bauform sind auch andere Bauformen der Einzelzellen und der Interkonnektoren möglich.

An den Interkonnektor und an dessen Anbindung zu der jeweils angrenzenden Anode (einer ersten Einzelzelle) und der jeweils angrenzenden Kathode (einer zweiten, benachbarten Einzelzelle) werden verschiedene Anforderungen gestellt. Zum Einen soll der thermische Ausdehnungskoeffizient des Interkonnektors möglichst gut an die keramische Hochtemperaturbrennstoffzelle angepasst sein, um eine gute, thermomechanische Kompatibilität mit den anderen Komponenten der Hochtemperaturbrennstoffzelle, insbesondere mit der Kathode und der Anode, zu gewährleisten. Ferner soll der Interkonnektor bei den hohen, im Einsatz auftretenden Temperaturen eine gute, elektrische Kontaktierung zwischen der Kathode und der Anode herstellen und oxidationsbeständig sein. Bei der planaren Bauform sind für die Gaszuführung in der Regel beidseitig des plattenförmigen Interkonnektors offene Kanäle vorgesehen und die elektrische Kontaktierung erfolgt über die Deckflächen der die Kanäle bildenden Konturen des Interkonnektors.

Aufgrund dieser Anforderungen kommen für Interkonnektoren nur sehr wenige, in der Regel metallische Werkstoffe in Frage. Bei der planaren Bauform werden für Interkonnektoren insbesondere Werkstoffe mit einem hohen Chromgehalt in Betracht gezogen, wie beispielsweise Chrombasislegierungen oder ferritische Stähle (chromhaltige Legierungen auf Eisenbasis). Bei diesen Werkstoffen ist problematisch, dass sich bei erhöhten Temperaturen unter oxidierender Atmosphäre, welche Bedingungen im Einsatz der Hochtemperaturbrennstoffzelle insbesondere kathodenseitig an dem Interkonnektor vorliegen, eine Chrom(III)-Oxidschicht (Cr₂O₃) auf der Oberfläche des Interkonnektors ausbildet. Bei den hohen Einsatztemperaturen reagiert das Chromoxid mit Sauerstoff und Wasserdampf unter Bildung von Chromtrioxid CrO₃ und Chromoxidhydroxiden CrO₂(OH)₂/CrO(OH)₄. Diese neu gebildeten chromhaltigen Verbindungen haben bei der Betriebstemperatur der Hochtemperaturbrennstoffzelle einen hohen Dampfdruck und können so leicht in die Kathode gelangen. Dort reagieren diese Cr-Spezies mit dem Kathodenmaterial, was zu einer Änderung seiner Zusammensetzung und langfristig zu einer Verschlechterung der katalytischen Aktivität der Kathode führt.

Zur Verhinderung oder Minimierung der Chromverdampfung sowie als Korrosionsschutz des Interkonnektors ist es bekannt, zwischen Interkonnektor und Kathode, insbesondere kathodenseitig auf dem Interkonnektor, flächendeckend eine Schutzschicht vorzusehen. Zusätzlich soll solch eine Schutzschicht eine hohe elektrische Leitfähigkeit aufweisen, so dass über diese eine gute elektrische Kontaktierung zwischen Interkonnektor und Kathode ermöglicht wird. Weiterhin ist bekannt, zur elektrischen Kontaktierung entsprechende Kontaktschichten zwischen Interkonnektor und Kathode vorzusehen, die eine hohe, elektrische Leitfähigkeit aufweisen und auch bei den hohen Einsatztemperaturen eine gute Anbindung an die Kathode gewährleisten. Solche Kontaktschichten müssen nicht zwingend flächendeckend ausgebildet sein sondern können beispielsweise nur an den stromleitenden Kontaktflächen zwischen Interkonnektor und Kathode vorgesehen sein.

Aus der Druckschrift DE 10 2007 018 261 A1 ist ein Werkstoff für Schutzschichten auf hochtemperaturbelastbaren, chromoxidbildenden Substraten bekannt, der aus einer Spinellphase und einer oxidischen Nebenphase gebildet ist. Bei einem, in der Druckschrift DE 10 2007 018 261 A1 beschriebenen Herstellungsverfahren erfolgt eine Wärmebehandlung von, jeweils in Pulverform vorliegendem Kupfer(II)oxid (CuO), Nickel(II)oxid (NiO) und Mangan(III)oxid (Mn₂O₃)/Eisen(III)Oxid(Fe₂O₃) an Luft oder an Sauerstoff enthaltender Atmosphäre.

Aus der US 2009/155667 A1 ist es bekannt, auf einem Interkonnektor (Bipolarplatte) eine Trägerschicht und eine Schutzschicht auszubilden. Die Schutzschicht soll dabei mit einem mindestens ternären Oxidsystem gebildet sein. Als Oxide werden die von Mn, Co, Fe und Cu genannt. Dadurch soll dem durch die Diffusion bzw. die Verdampfung von Chrom hervorgerufenen Problem entgegengewirkt werden. Dies wird aber nur unzureichend erreicht. Außerdem ist die elektrische Leitfähigkeit dieser Schutzschichten begrenzt und das thermische Ausdehnungsverhalten kann gegenüber dem Interkonnektor und auch der Kathode nicht in ausreichendem Maß angepasst werden, so dass es zu Schäden, wie Rissen kommen kann, die die Schutzfunktion beeinträchtigen.

In EP 2 393 148 A1, die aus der WO 2010/087298 A1 hervorgegangen ist, betrifft einen Aufbau mit zwei Schichten, die zwischen einem Interkonnektor und einer Kathode von Brennstoffzellen ausgebildet werden sollen. In einer ersten Schicht muss dabei ZnO und in einer zweiten Schicht ein (La, Sr)MnO₃ Perowskit enthalten sein. In der ersten Schicht können zwar weitere oxidische Komponenten, wie ZnMn₂O₄ und MnCo₂O₄, es soll aber kein Perowskit enthalten sein. In der zweiten Schicht soll wiederum kein ZnO enthalten sein. Insbesondere die elektrische Leitfähigkeit der ersten Schicht bereitet bei dieser technischen Lösung Probleme. Durch den Einsatz von ZnO wird aber eine zu kleine elektrische Leitfähigkeit erreicht, was den Wirkungsgrad von Brennstoffzellen sehr negativ beeinflusst.

Aus DE 10150 248 A1 sind eine Halbleiterkeramik mit negativem Temperaturkoeffizienten des Widerstands und ein solcher Thermistor beschrieben.

Die Offenbarung von EP 0 866 472 A2 betrifft ebenfalls einen Thermistor.

Von T. Brylewski et al. ist es aus "Perovkite and spinel functional coatings for SOFC metallic interconnects"; MATERIALS SCIENCE FORUM, TRANS TECH PUBLICATIONS LTD-SWITZERLAND, CH, Bd. 595-598, Nr. Part 2, 1. Januar 2008 (2008-01-01), Seiten 813-822, XP008137667, ISSN: 0255-5476 bekannt, mittels Spinell- und Perowskitschichten die Verdampfungsrate von Chrom zu reduzieren. Für Spinelle wird darin vorgeschlagen Mn_{1,5} Cr_{1,5}O₄ oder MnCo₂O₄ einzusetzen. Mit dieser bekannten technischen Lösung können aber die wichtigen Anforderungen, nämlich ein an die Werkstoffe eines Interkonnektors und einer Kathode angepasstes thermisches Ausdehnungsverhalten, eine hohe elektrische Leitfähigkeit sowie das Diffusions- und Verdampfungsproblem von Chrom insgesamt nicht ausreichend erfüllt werden.

In "Developement and characterization of a quasi-ternäry diagram based on La0,8Sr0,2(Co, Cu, Fe)O3 oxides in view of application as a cathode contact material for solid fuel cells", SOLID STATE IONICS, NORTH HOLLAND PUB. COM-PANY, AMSTERDAM; NL, Bd. 180, Nr. 9-10, 29. Mai 2009, Seiten 731-737, XP026097616, ISSN: 0167-2738, DOI: 10.1016/J.SSI.2009.03.006 wurden von X. Montero et al. Untersuchungen vorgestellt, bei denen Spinelle und Perowskite mit unterschiedlicher Zusammensetzung als Kontaktschicht und eine Schutzschicht eines Spinels (MCF) mit MnCo_{1,9} Fe_{0.1}O₄ berücksichtigt worden sind. Dabei wurde insbesondere der Einfluss von Kupfer in Perowskit untersucht.

Die Aufgabe der vorliegenden Erfindung besteht darin, einen Schichtaufbau zwischen einem Interkonnektor und einer Kathode einer Hochtemperaturbrennstoffzelle zur Verfügung zu stellen, mit dem eine gute Schutzfunktion (gegen Korrosion und gegen Chromverdampfung), eine hohe elektrische Leitfähigkeit sowie ein gutes an die Werkstoffe eines Interkonnektors und einer Kathode angepasstes thermisches Ausdehnungsverhalten erreichbar sind.

Außerdem soll die Herstellung kostengünstig möglich sein.

Erfindungsgemäß wird diese Aufgabe mit einem Schichtaufbau, der die Merkmale des Anspruchs 1 aufweist, gelöst. Der Schichtaufbau kann gemäß Anspruch 10 zur Ausbildung eines keramischen Schichtaufbaus verwendet werden. Vorteilhafte Weiterbildungen der Erfindung sind mit in untergeordneten Ansprüchen angegebenen technischen Merkmalen erreichbar.
Der erfindungsgemäße Schichtaufbau, der zwischen einem Interkonnektor und einer Kathode einer Hochtemperaturbrennstoffzelle ausgebildet ist, ist im Grünzustand mit einem pulverförmigen Spinell sowie mindestens eines Metalloxids, das ausgewählt ist aus CuO, NiO, CoOₓ und MnOₓ als Sinteradditiv, und mindestens einem pulverförmigen Perowskit gebildet. Dabei ist in keiner dieser chemischen Verbindungen Chrom enthalten. Außerdem sollte auch kein Zn insbesondere ZnO enthalten sein. Der Interkonnektor besteht aus einer chromhaltigen Metalllegierung, wie dies nach dem Stand der Technik üblich ist.

Der Anteil an enthaltenem Spinell mit den Metalloxiden als Sinteradditiv verringert sich ausgehend von der dem Interkonnektor zugewandten Seite bis zur der der Kathode zugewandten Seite. Beim Anteil an Perowskit verhält es sich umgekehrt und der Anteil an Perowskit verringert sich ausgehend von der der Kathode zugewandten Seite in Richtung der dem Interkonnektor zugewandten Seite.

Dies kann am einfachsten erreicht werden, wenn der Schichtaufbau aus mindestens zwei Teilschichten mit unterschiedlicher Konsistenz gebildet ist. Es besteht aber auch die Möglichkeit die jeweiligen Anteile kontinuierlich von einer Seite des Schichtaufbaus bis zur gegenüberliegenden Seite zu verändern.

Bevorzugt kann als Perowskit ein nichtstöchiometrisches Perowskit, bei dem der A^{p} -Gitterplatz der Perowskit-Kristallstruktur A^{p}B^{p}O₃ mit mindestens einem Metall aus der Gruppe der chemischen Elemente La, Sr, Ca und Y besetzt ist und der B^{p} -Gitterplatz mit mindestens einem Metall der Gruppe der chemischen Elemente Mn, Ni, Co und Fe besetzt ist, eingesetzt werden.

Durch die Nichtstöchiometrie des Perowskits kann die elektrische Leitfähigkeit weiter erhöht und eine verbesserte Anpassung des thermischen Ausdehnungskoeffizienten an die anderen Elemente erreicht werden.

Als Spinell kann vorteilhaft (CuₓₛNi₁₋ₓₛ)_{ys}(Mn_{1-zs}Fe_{zs})₂O₄ mit 0 ≤ xs ≤ 1,0, 0,8 ≤ γs ≤ 1,2 und 0,0 ≤ zs ≤ 1,0 und als Perowskit vorteilhaft (Ln^{p}₁₋ₓₚE^{p}ₓₚ)_{1-zp}M^{p}O_{3-δ} mit 0 ≤ xp ≤ 0,35, 0,0 ≤ zp ≤ 0,03 enthalten sein. Dabei sind Ln^{p} mindestens ein Metall aus der Gruppe der Seltenerden, E^{p} mindestens ein Metall aus der Gruppe der Erdalkalimetalle und M^{p} mindestens ein Metall aus der Gruppe der Übergangsmetalle.

Günstig ist es, wenn der unmittelbar an der Kathode anliegende Bereich des Schichtaufbaus oder eine dritte dort angeordnete Teilschicht ausschließlich mit Perowskit gebildet ist. Damit kann eine besonders gute Anbindung an die Kathode, was sowohl die elektrische Leitfähigkeit, wie auch das thermische Ausdehnungsverhalten betrifft, erreicht werden.

Mit der Verwendung dieses grünfesten Schichtaufbaus wird nach einer zur Sinterung führenden Wärmebehandlung ein keramischer Schichtaufbau zwischen einem Interkonnektor und einer Kathode einer Hochtemperaturbrennstoffzelle hergestellt. Dieser keramische Schichtaufbau ist mit einer Spinellphase und mindestens einer Perowskitphase gebildet. Es können noch Reste mindestens eines der folgend genannten Metalloxide CuO, NiO, CoOₓ und MnOₓ enthalten sein.

Der Anteil an enthaltenem Spinell ist ausgehend von der dem Interkonnektor zugewandten Seite bis zur der Kathode zugewandten Seite verringert. Dies trifft ähnlich auf den Anteil an Perowskit zu, der sich ausgehend von der der Kathode zugewandten Seite in Richtung der dem Interkonnektor zugewandten Seite ebenfalls verringert. Der keramische Schichtaufbau weist im Grenzflächenbereich zum Interkonnektor über eine Dicke von mindestens 10 µm eine Porosität ≤ 25 % und/oder einen mittleren Porendurchmesser ≤ 1 µm auf. Außerdem kann die Porosität des keramischen Schichtaufbaus in Richtung der Kathode vergrößert sein.

Die Anteile, die Porosität und die Porengröße können sich in den jeweiligen Richtungen kontinuierlich aber auch abgestuft verändern. Bei einer gestuften Veränderung ist ein keramischer Schichtaufbau aus mehreren entsprechenden Teilschichten gebildet.

Durch geeignete Wahl an enthaltenen Anteilen von CuO und NiO kann eine besonders gute Anpassung des thermischen Ausdehnungsverhaltens, insbesondere in Bezug zum Interkonnektorwerkstoff, erreicht werden.

Keramische, gesinterte Schichten, die zumindest eine Spinell-Phase aufweisen, haben sich als Schutzschichten für Interkonnektoren bewährt. Die erfindungsgemäße Schicht kann auf sehr einfache Weise hergestellt werden. Zur Herstellung der Schicht müssen nur die entsprechenden Pulverpartikel bereitgestellt werden und als Schicht auf ein entsprechendes Substrat (z.B. Interkonnektor oder Kathode) aufgetragen werden. Der Zusammenhalt der Pulverpartikel in der Schicht kann mittels einer Flüssigkeit, mittels eines Binders, elektrostatisch, etc. erfolgen. Für das Aufbringen der Schicht müssen keine kostenintensiven Auftragsverfahren, wie beispielsweise Plasmaspritzen, bei dem ein vergleichsweise hoher Ausschuss an Ausgangspulver auftritt, CVD, PVD; etc. angewendet werden. Vielmehr kann ein einfaches Auftragsverfahren (z.B. Nasssprühverfahren, Walzenbeschichtung, Dip-Coating (deutsch: Überziehen durch Eintauchen), etc.) gewählt werden, bei dem die Schicht in vergleichsweise hoher Dicke und ohne hohen Pulverausschuss auf das entsprechende Substrat aufgetragen werden kann. Durch Sintern können dabei auch vergleichsweise dicke keramische, gesinterte Schichten erzielt werden. Es hat sich gezeigt, dass durch Zugabe von Sinteradditiv-Pulverpartikeln zu Spinell-Pulverpartikeln im erfindungsgemäßen Schichtaufbau (im Grünzustand) nach dem Sintern derselben ein keramischer gesinterter Schichtaufbau erhalten wird, der über große Schichtdicken hinweg eine niedrige Porosität, insbesondere an der dem Interkonnektor zugewandten Seite und eine vergrößerte Porosität in Richtung der der Kathode zugewandten Seite aufweist. Diese vorteilhaften Eigenschaften konnten bei bisherigen, keramischen, gesinterten Schichten dieser Art nicht erreicht werden. Insbesondere in Fällen, in denen eine Schicht dieser Art kein Sinteradditiv enthält, weist die durch Sintern dieser Schicht erhältliche, keramische, gesinterte Schicht (die ebenfalls eine Spinell-Phase aufweist) eine deutlich höhere Porosität auf. Weiterhin hat sich im Hinblick auf die Eigenschaften (Schutzfunktion, hohe elektrische Leitfähigkeit) des keramischen, gesinterten Schichtaufbaus als vorteilhaft herausgestellt, dass gemäß der Erfindung das Sinteradditiv und der Spinell jeweils als separate Pulverpartikel (d.h. als getrennt voneinander vorliegende Partikel) in der Schicht im Grünzustand enthalten sind. Die erfindungsgemäß erzielbare niedrige Porosität im gesinterten, keramischen Schichtaufbau über vergleichsweise hohe Schichtdicken hinweg, ist insbesondere hinsichtlich der Schutzfunktionen der Schicht (Minimierung der Chromverdampfung, Korrosionsschutz) als auch hinsichtlich einer hohen, elektrischen Leitfähigkeit vorteilhaft. Die Schutzfunktion des keramischen, gesinterten Schichtaufbaus wird zumindest teilweise auch dadurch bewirkt, dass die Spinell-Phase bei den hohen, im Einsatz der Hochtemperaturbrennstoffzelle vorliegenden Temperaturen und der oxidierenden Betriebsatmosphäre mit den aus dem Interkonnektor freigesetzten chromhaltigen Oxidverbindungen reagiert und diese bindet. Es kann im Grenzflächenbereich zwischen Schichtaufbau und Interkonnektor auf den nachfolgend noch einzugehen sein wird, Chrom chemisch gebunden sein, was zu einer weiter erhöhten Dichte führt, die die Barrierewirkung für aus dem Interkonnektorwerkstoff austretendes Chrom verbessert. So kann beispielsweise CrO₃ mit Mn₂O₃ zu MnCr₃O₄ werden. Chrom kann auch in Cu,Ni(MnCr)₂O₄ in einem unmittelbar an die Oberfläche des Interkonnektors angrenzenden Bereich des keramischen Schichtaufbaus gebunden werden. Die chemischen Reaktionen können bei der zur Sinterung führenden Wärmebehandlung und auch während des eigentlichen Brennstoffzellenbetriebs ablaufen. Dies kann bis zu einem Sättigungsgrad erfolgen, bei dem diese chemischen Reaktionen nicht mehr ablaufen können. Dann ist eine entsprechend ausreichend Dicke und dichte Schicht an der Oberfläche des Interkonnektors im keramischen Schichtaufbau ausgebildet, die den unerwünschten Austritt von Chrom verhindern kann.
Sofern in dem vorliegenden Zusammenhang erwähnt wird, dass die Schicht (im Grünzustand) und/oder die bei der Herstellung der Schicht verwendeten Pulverpartikel "zumindest" bestimmte, explizit angegebene Pulverpartikel (z.B. Spinell-Pulverpartikel, Sinteradditiv-Pulverpartikel und/oder Perowskit-Pulverpartikel) aufweist/aufweisen, bedeutet dies, dass daneben (neben den explizit genannten Pulverpartikeln), z.B. auch noch weitere Pulverpartikel und gegebenenfalls, sofern nicht explizit eine Beschränkung auf Pulverpartikel vorliegt, auch weitere Stoffe, Materialien, etc., bis auf die bereits ausgeschlossenen (Cr u. ZnO) enthalten sein können. Entsprechend gilt, wenn in dem vorliegenden Zusammenhang erwähnt wird, dass der keramische, gesinterte Schichtaufbau "zumindest" bestimmte, explizit angegebene Phasen aufweist (z.B. eine Spinell-Phase, eine Perowskit-Phase und/oder eine Metalloxid-Phase), dass der keramische, gesinterte Schichtaufbau neben der/den explizit genannten Phase(n) auch noch weitere Phasen aufweisen kann.

Mit "Spinell" soll jeweils ausgedrückt werden, dass der betreffende Stoff (hier: Spinell-Pulverpartikel und Spinell-Phase) durch eine oxidische Verbindung von mindestens einem Metall (in vielen Fällen von mindestens zwei Metallen) gebildet wird und in der Spinell-Kristallstruktur vorliegt. Die allgemeine Summenformel eines Spinells soll dabei A^{s}B^{s}₂O₄ sein, wobei A^{s} und B^{s} jeweils mit Metallen besetzte Gitterplätze in der Spinell-Kristallstruktur sind. Die Ausbildung der Spinell-Phase während des Schrittes des Sinterns erfolgt unter zumindest teilweisem Einbau des/der Metalloxide(s) des Sinteradditivs in die Spinellstruktur der Spinell-Pulverpartikel bzw. der Spinell-Phase. Die Spinell-Pulverpartikel und entsprechend auch die Spinell-Phase müssen nicht zwingend exakt stöchiometrisch sein. Unter "Sintern" wird vorliegend eine Wärmebehandlung des Schichtaufbaus in einem Temperaturbereich verstanden, in dem noch keine schmelzflüssige Phase innerhalb des Schichtaufbaus ausgebildet wird. Die Temperatur sollte insbesondere so hoch sein, dass Festkörperreaktionen durch Diffusionsprozesse ablaufen können. Ein gesinterter keramischer Schichtaufbau kann insbesondere daran erkennt werden, dass eine ausgeprägte Diffusionszone zwischen keramischem Schichtaufbau und Substrat (Interkonnektor) vorhanden ist.

Die im Anspruch 1 angegebenen Merkmale des Schichtaufbaus liegen vor, bevor dieser Schichtaufbau dem Schritt des Sinterns unterzogen wird (Grünzustand). Die ausgezeichneten Eigenschaften hinsichtlich der Schutzfunktion und der Kontaktierung werden erst nach dem Sintern des Schichtaufbaus bei einem daraus erhaltenen, keramischen, gesinterten Schichtaufbau erreicht. Die Eigenschaften des keramischen, gesinterten Schichtaufbaus werden dabei maßgeblich durch den Schichtaufbau im Grünzustand bestimmt. Der Schichtaufbau im Grünzustand kann auf dem entsprechenden Substrat (Interkonnektor und/oder Kathode) zunächst gesintert und in diesem Zustand genutzt werden. Alternativ kann eine Auslieferung im Grünzustand erfolgen und der Verfahrensschritt des Sinterns erfolgt erst nach dem Zusammenfügen einer Mehrzahl von Kathoden, Elektrolyten, Anoden und Interkonnektoren zu einem Brennstoffzellenstapel (was in der Regel durch einen anderen Hersteller durchgeführt wird). Zum keramischen, gesinterten Schichtaufbau ist anzumerken, dass sich dieser bei hohen Temperaturen, d.h. bereits bei dem erstmaligen Sintern und mit zunehmender Einsatzdauer in der Hochtemperaturbrennstoffzelle, zunehmend mit Material aus dem Interkonnektor, insbesondere mit chromhaltigen Oxidverbindungen, anreichern kann.

Der Halt (bzw. die Haftung) des keramischen, gesinterten Schichtaufbaus auf dem Substrat (z.B. dem Interkonnektor, aber auch Kathode möglich) wird durch Ausbildung eines Diffusionsverbundes während der zum Sintern führenden Wärmebehandlung erreicht. In entsprechender Weise kann auch zwischen dem keramischen Schichtaufbau und einem zweiten, mit dem keramischen Schichtaufbau zu verbindenden Bauteil (Kathode oder Interkonnektor) ein Diffusionsverbund durch Sintern derselben in zusammengefügten Zustand ausgebildet werden. Bei dem Interkonnektor wird die Ausbildung des Diffusionsverbundes unter anderem durch das, in dem Interkonnektor enthaltene Chrom unterstützt, das während des Sinterns zum Teil in den Schichtaufbau diffundiert, dort reagiert und chemisch gebunden werden kann. Bei der Kathode wird die Ausbildung des Diffusionsverbundes durch eine geeignete Anpassung des Werkstoffs des Schichtaufbaus an den Werkstoff der Kathode begünstigt.

Der aus dem Schichtaufbau (im Grünzustand) erhaltene, keramische, gesinterte Schichtaufbau kann als Schutzschicht und/oder als Kontaktschicht betrachtet werden. Für eine Wirkung als Schutzschicht sollten (der Schichtaufbau im Grünzustand und entsprechend auch der daraus erhaltene, keramische, gesinterte Schichtaufbau) eine vorzugsweise flächig die gesamte kathodenseitige (gegebenenfalls Konturen aufweisende) Oberfläche des Interkonnektors und gegebenenfalls auch die Seitenflächen des Interkonnektors überdeckt sein. Bei einer Kontaktschichtfunktion können lediglich die stromleitenden Kontaktflächen des Interkonnektors überdeckt sein. Diese Möglichkeiten bestehen unabhängig von der konkreten Form des Interkonnektors und der Kathode. Bevorzugt sind eine plattenförmige Form des Interkonnektors und der Kathode, wobei alternativ auch eine rohrförmige oder gewellte Form möglich ist. Grundsätzlich besteht die Möglichkeit, einen einzelnen keramischen, gesinterten Schichtaufbau, der die Funktionen einer Schutzschicht und einer Kontaktschicht in einem erfüllen kann, oder auch einen Schichtverbund, bei dem die Funktionen des Schutzes und der Kontaktierung zumindest teilweise auf zwei oder mehrere, übereinander angeordnete Teilschichten des Schichtverbundes aufgeteilt sind, bereitzustellen. Da die elektrische Stromleitung durch sämtliche Teilschichten zwischen Interkonnektor und Kathode hindurch erfolgt, sollten möglichst alle Teilschichten eine gute elektrische Leitfähigkeit aufweisen. Der Schichtaufbau kann grundsätzlich auf dem Interkonnektor oder auf der Kathode als Substrat, direkt oder mittelbar auf einer bereits vorhandenen Schicht aufgebracht sein. Bevorzugt ist, dass der Schichtaufbau direkt auf dem Interkonnektor als Substrat aufgebracht ist, bzw. gegebenenfalls sämtliche, den Schichtaufbau bildenden Teilschichten übereinander auf dem Interkonnektor als Substrat aufgebracht sind.

Gemäß einer Weiterbildung werden die in der Schicht enthaltenen Pulverpartikel (abgesehen von Verunreinigungen) ausschließlich durch Spinell-Pulverpartikel und Sinteradditiv-Pulverpartikel gebildet (d.h. es sind keine weiteren, Metalle enthaltenden Stoffe enthalten). In diesem Fall wird/werden während des Schrittes des Sinterns das/die Metalloxid(e) des Sinteradditivs insbesondere vollständig in die Spinellstruktur der Spinell-Pulverpartikel bzw. der Spinell-Phase eingebaut. Der durch Sintern des Schichtaufbaus erhaltene keramische, gesinterte Schichtaufbau wird dementsprechend ausschließlich durch eine Spinell-Phase gebildet (abgesehen von vernachlässigbaren, weiteren Phasen mit geringem Anteil). Gemäß einer Weiterbildung können die in der Schicht enthaltenen Pulverpartikel zu 65 Masse-% bis 90 Masse-% aus Spinell-Pulverpartikeln und der verbleibende Anteil durch Sinteradditiv-Pulverpartikel gebildet werden. Gemäß einer Weiterbildung können die Sinteradditiv-Pulverpartikel durch eines oder mehrere Einzel-Metalloxide (bzw. singuläre Metalloxide) von einer entsprechenden Anzahl von Metallen M^{a} gebildet werden. Als Einzel-Metalloxid soll dabei ein Metalloxid verstanden werden, das jeweils nur ein einziges Metall enthält und keine feste Lösung mit einem weiteren Metall bildet. Insbesondere liegen die Einzel-Metalloxide jeweils als separate Pulverpartikel vor.

Gemäß einer Weiterbildung können die in dem Schichtaufbau enthaltenen Pulverpartikel in eine, aus einem Binder gebildete Haltematrix eingebunden werden. Der Binder dient dabei dazu, die Pulverpartikel im Schichtaufbau (in dem Grünzustand) zusammenzuhalten. Auf diese Weise können zum Auftragen des Schichtaufbaus einfach ausgestaltete Auftragsverfahren eingesetzt werden und die Handhabung des Schichtaufbaus im Grünzustand kann erleichtert werden. Bei dem Schritt des Sinterns verdampft der Binder. Insbesondere sind als Binder organische, temporäre Binder geeignet, die bei dem Schritt des Sinterns entfernt werden, wie beispielsweise Ethylzellulose, Polyvenylalkohole, Polyvenylbutyral, etc..
Gemäß einer Weiterbildung sind die im Schichtaufbau enthaltenen Pulverpartikel chromfrei (abgesehen von Verunreinigungen). Auf diese Weise sind auch die im keramischen, gesinterten Schichtaufbau enthaltenen Verbindungen, insbesondere die Spinell-Phase, zunächst weitgehend chromfrei. Dadurch kann sie während des Einsatzes relativ hohe Mengen an chromhaltigen Oxidverbindungen, die aus dem Interkonnektor austreten, aufnehmen.

Gemäß einer Weiterbildung können die Spinell-Pulverpartikel aus einer oxidischen Verbindung von mindestens einem Metall, insbesondere von mindestens zwei Metallen, aus der Gruppe der Elemente Cu (Kupfer), Ni (Nickel), Mn (Mangan), Co (Cobalt) und Fe (Eisen). Dabei ist zu berücksichtigen, dass Spinelle in den meisten Fällen durch Metalloxide von mindestens zwei Metallen gebildet werden, wobei auch Metalloxide von einem einzigen Metall (z.B. Mn, Co) in der Spinell-Kristallstruktur vorliegen können. Allgemein sind für die Spinell-Pulverpartikel Metalle der Übergangsmetalle gut geeignet, wobei bei den genannten chemischen Elementen dieser Gruppe besonders gute Ergebnisse hinsichtlich der Schutzfunktion und der elektrischen Leitfähigkeit erzielt werden konnten und diese chemischen Elemente zusätzlich kostengünstig erhältlich sind. Zumindest ein Teil der genannten Metalle Cu, Ni, Mn, Co und Fe kann dabei jeweils sowohl auf dem A^{s}-Gitterplatz und zusätzlich oder alternativ auch auf dem B^{s}-Gitterplatz er Spinell-Kristallstruktur sitzen. Gemäß einer Weiterbildung sind die A^{s}- und B^{s}-Gitterplätze der Spinell-Kristallstruktur zu mehr als 50 %, insbesondere zu mehr als 80 % (der verfügbaren A^{s} und B^{s}-Gitterplätze) mit mindestens zwei Elementen der Gruppe Cu, Ni, Mn, Co und Fe besetzt. Insbesondere wird die oxidische Verbindung der Spinell-Pulverpartikel ausschließlich aus Metallen dieser Gruppe gebildet (abgesehen von Verunreinigungen). Gemäß einer Weiterbildung ist der A^{s}-Gitterplatz durchgehend mit Cu und/oder Ni besetzt und der B^{s}-Gitterplatz ist durchgehend mit Mn und/oder Fe (abgesehen von Verunreinigungen) besetzt. Die angegebenen, bevorzugten Elemente und deren Anteile sind gleichermaßen für die Spinell-Phase des keramischen, gesinterten Schichtaufbaus bevorzugt.

Gemäß einer Weiterbildung können das/die Metalloxid(e) der Sinteradditiv-Pulverpartikel so gewählt werden, dass während des Sinterns ein Einbau des/der Metalloxide(s) des Sinteradditivs in die Spinellstruktur der Spinell-Pulverpartikel bzw. der Spinell-Phase begünstigt wird und dadurch im keramischen, gesinterten Schichtaufbau über hohe Schichtdicken hinweg eine niedrige Porosität erreicht wird. Gemäß einer Weiterbildung kann dies dadurch erreicht werden, dass mindestens eines des/der in den Sinteradditiv-Pulverpartikeln enthaltenen Metalle(s) M^{a} zumindest mit einem Teil des mindestens einen Metalles, insbesondere der mindestens zwei Metalle, der oxidischen Verbindung der Spinell-Pulverpartikel übereinstimmt. Insbesondere können dabei sämtliche, in der oxidischen Verbindung der Spinell-Pulverpartikel enthaltenen Metalle (abgesehen von Verunreinigungen) auch in den Sinteradditiv-Pulverpartikeln enthalten sein. Insbesondere sollten die in den Sinteradditiv-Pulverpartikeln enthaltenen und mit den Metallen der Spinell-Pulverpartikel übereinstimmenden Metalle in dem gleichen, stöchiometrischen Mengenverhältnis wie in den Spinell-Pulverpartikeln vorliegen. Daneben können die Sinteradditiv-Pulverpartikel zusätzlich auch noch weitere Metalle enthalten. Gemäß einer Weiterbildung sollte in den Sinteradditiv-Pulverpartikeln mindestens ein Metall aus der Gruppe Cu, Ni, Mn, Co und Fe enthalten sein. Insbesondere können die Sinteradditiv-Pulverpartikel ausschließlich (abgesehen von Verunreinigungen) aus Metalloxiden (insbesondere aus Einzel-Metalloxiden) von Metallen dieser Gruppe gebildet sein.

Gemäß einer Weiterbildung kann der Schichtaufbau Perowskit-Pulverpartikel aus einer oxidischen Verbindung von mindestens zwei Metallen aufweisen. Die Zugabe von Perowskit-Pulverpartikeln bewirkt dabei, dass der durch Sintern des Schichtaufbaus erhaltene, keramische, gesinterte Schichtaufbau zusätzlich zu der Spinell-Phase eine Perowskit-Phase und in der Regel auch eine Metalloxid-Phase aufweist. Die Vorsehung der Perowskit-Pulverpartikel in der Schicht im Grünzustand und entsprechend der Perowskit-Phase im keramischen, gesinterten Schichtaufbau erlaubt eine gute Anbindung an die Kathode, die in der Regel ebenfalls aus einem Perowskit gebildet ist. Insbesondere wird hierdurch die Ausbildung eines haftenden Diffusionsverbundes zwischen dem keramischen Schichtaufbau und der Kathode begünstigt. Zudem zeichnen sich Perowskite durch eine hohe spezifische elektrische Leitfähigkeit aus. Mit zunehmenden Perowskit-Anteil im keramischen, gesinterten Schichtaufbau (was durch einen entsprechend höheren Anteil an Perowskit-Pulverpartikeln im Schichtaufbau im Grünzustand erreichbar ist) kann die Porosität des keramischen Schichtaufbaus in Richtung der Kathode zunehmen. Die Zusammensetzung der Perowskit-Pulverpartikel und entsprechend der Perowskit-Phase können insbesondere derart gewählt werden, dass eine gute Anbindung an die Kathode begünstigt wird. Dies ist insbesondere dann der Fall, wenn die gleiche oder eine ähnliche Zusammensetzung gewählt wird, die auch bei dem Perowskit der Kathode vorliegt. Der gemäß dieser Weiterbildung erhältliche, keramische, gesinterte Schichtaufbau, der auch eine Perowskit-Phase aufweist, kann grundsätzlich sowohl als Schutzschicht als auch als Kontaktschicht genutzt werden. Gemäß einer Weiterbildung kann sie als Kontaktschicht eingesetzt werden. Insbesondere erfolgt darüber direkt die Anbindung zu der Kathode.
Mit "Perowskit" soll jeweils ausgedrückt werden, dass der betreffende Stoff (hier: Perowskit-Pulverpartikel und Perowskit-Phase) durch eine oxidische Verbindung von mindestens zwei Metallen gebildet wird und in der Perowskit-Kristallstruktur vorliegt. Die allgemeine Summenformel eines Perowskits ist A^{p}B^{p}O₃, wobei A^{p} und B^{p} jeweils mit Metallen besetzte Gitterplätze in der Perowskit-Kristallstruktur sind. Die Perowskit-Pulverpartikel und entsprechend auch die Perowskit-Phase müssen nicht zwingend exakt stöchiometrisch sein. Gemäß einer Weiterbildung sind sowohl die Perowskit-Pulverpartikel als auch die Perowskit-Phase jeweils ein unterstöchiometrischer Perowskit. Insbesondere ist dabei der A^{p}-Gitterplatz unterbesetzt. Dadurch kann die elektrische Leitfähigkeit weiter erhöht sowie die Anpassung des thermischen Ausdehnungsverhaltens verbessert werden.

Die "Metalloxid-Phase" kann sich dann ausbilden, wenn im Schichtaufbau im Grünzustand neben den Spinell-Pulverpartikeln und Sinteradditiv-Pulverpartikeln auch noch Perowskit-Pulverpartikel enthalten sind. Die Metalloxid-Phase kann durch mindestens ein Reaktionsprodukt aus zumindest einem Teil der Spinell-Pulverpartikel, einem Teil der Sinteradditiv-Pulverpartikel und einem Teil der Perowskit-Pulverpartikel gebildet werden. Der relative Anteil der Metalloxid-Phase innerhalb des keramischen, gesinterten Schichtaufbaus und die Anteile der verschiedenen Ausgangspulver an der Metalloxid-Phase können je nach Zusammensetzung und relativen Anteilen der Ausgangspulver stark variieren (gegebenenfalls kann der Fall auftreten, dass sich die Metalloxid-Phase nicht ausbildet). Auch kann/können die Kristallstruktur und/oder die Zusammensetzung der Metalloxid-Phase lokal variieren. Die Schutzfunktion des keramischen, gesinterten Schichtaufbaus, der auch eine Perowskit-Phase und eine Metalloxid-Phase aufweisen kann, wird zumindest teilweise dadurch bewirkt, dass die Spinell-Phase und die Metalloxid-Phase bei den hohen, im Einsatz der Hochtemperaturbrennstoffzelle vorliegenden Temperaturen und der oxidierenden Betriebsatmosphäre mit den aus dem Interkonnektor freigesetzten chromhaltigen Oxidverbindungen reagieren und diese damit chemisch binden.

Gemäß einer Weiterbildung ist bei den Perowskit-Pulverpartikeln (und entsprechend in der Perowskit-Phase) der A^{p}-Gitterplatz der Perowskit-Kristallstruktur mit mindestens einem Metall aus der Gruppe der Seltenerden und/oder Erdalkalimetalle besetzt und der B^{p}-Gitterplatz mit mindestens einem Metall aus der Gruppe der Übergangsmetalle. Dabei konnten hinsichtlich der Schutzfunktion und der elektrischen Leitfähigkeit insbesondere dann gute Ergebnisse erzielt werden, wenn der A^{p}-Gitterplatz mit mindestens einem Metall aus der Gruppe der Elemente La, Sr, Ca und Y besetzt ist und der B^{p}-Gitterplatz mit mindestens einem Metall aus der Gruppe der Elemente Mn, Cu, Ni, Co und Fe besetzt ist.

Gemäß einer Weiterbildung wird der Schichtaufbau (im Grünzustand) durch mindestens zwei, aufeinander ausgebildete Teilschichten gebildet, wobei die erste Teilschicht einen niedrigeren Anteil (insbesondere keinen oder nahezu keinen Anteil) an Perowskit-Pulverpartikeln als die zweite Teilschicht aufweist. Entsprechend weist auch der daraus erhaltene, keramische, gesinterte Schichtaufbau mindestens zwei Teilschichten auf, bei denen die erste Teilschicht einen niedrigeren Anteil der Perowskit-Phase als die zweite Teilschicht aufweist. In entsprechender Weise können auch mehr als zwei Teilschichten mit zunehmenden Perowskit-Anteil vorgesehen werden. Dementsprechend kann im keramischen, gesinterten Schichtaufbau ein Perowskit-Gradient eingestellt werden, so dass die, an den Interkonnektor angebundene oder anzubindende Teilschicht den niedrigsten Perowskit-Anteil (insbesondere keinen Perowskit-Anteil) aufweist und die, an die Kathode angebundene oder anzubindende Teilschicht den höchsten Perowskit-Anteil aufweist. Dadurch kann auch ein Porositäts-Gradient von einer niedrigen Porosität im Bereich des Interkonnektors zu einer höheren Porosität im Bereich der Kathode erreicht werden. Auf diese Weise kann die erste Teilschicht optimal hinsichtlich der bereitzustellenden Schutzfunktion und des thermischen Ausdehnungskoeffizienten an den interkonnektor angepasst werden. Die an die Kathode anzubindende Teilschicht kann optimal hinsichtlich der Werkstoffeigenschaften, des thermischen Ausdehnungskoeffizienten und hinsichtlich einer guten Ausbildung eines Diffusionsverbundes an die Kathode angepasst werden. Ferner kann mit mehreren Teilschichten ein guter, möglichst fließender Übergang dieser Eigenschaften erreicht werden. Die direkt an den Interkonnektor angebundene Teilschicht bedeckt vorzugsweise flächig die gesamte kathodenseitige (gegebenenfalls Konturen aufweisende) Oberfläche des Interkonnektors. Bei mindestens einer darüber ausgebildeten Teilschicht, die als Kontaktschicht dienen kann, kann vorgesehen sein, dass diese nur die stromleitenden Kontaktflächen des Interkonnektors überdeckt.

Durch das Mengenverhältnis und die Stöchiometrie der Ausgangspulver im Schichtaufbau im Grünzustand können die Anteile der verschiedenen Phasen im keramischen, gesinterten Schichtaufbau und deren Stöchiometrie beeinflusst werden. Insbesondere können die Anteile der Spinell-Phase und der Perowskit-Phase weitgehend dem Mengenverhältnis der Spinell-, und Perowskit-Ausgangspulver innerhalb des Schichtaufbaus im Grünzustand entsprechen. Auch die Stöchiometrie der Spinell-Phase kann weitgehend der Stöchiometrie der Spinell-Pulverpartikel und die Stöchiometrie der Perowskit-Phase kann der Stöchiometrie der Perowskit-Pulverpartikel weitgehend entsprechen. Sowohl hinsichtlich der Anteile als auch hinsichtlich der Stöchiometrie kann berücksichtigt werden, dass aufgrund der stattfindenden Diffusionsprozesse und Festkörperreaktionen während des Sinterns ein Anteil der Sinteradditiv-Pulverpartikel in die Spinell-Phase eingebaut wird und dass ein Anteil der Sinteradditiv-Pulverpartikel, der Spinell-Pulverpartikel und der Perowskit-Pulverpartikel in die Metalloxid-Phase eingebaut wird bzw. diese Metalloxid-Phase bilden. Gemäß einer Weiterbildung werden die im Schichtaufbau enthaltenen Pulverpartikel zumindest in dem Bereich der ersten Teilschicht zu einem Anteil von 65 Masse-% bis 95,9 Masse-% aus Spinell-Pulverpartikeln, zu einem Anteil von 4 Masse-% bis 29 Masse-% aus Sinteradditiv-Pulverpartikeln und zu einem Anteil von 0,1 Masse-% bis 6 Masse-% aus Perowskit-Pulverpartikeln gebildet. Der daraus erhältliche, keramische, gesinterte Schichtaufbau kann insbesondere eine Schutzschicht bilden, da diese Zusammensetzungsbereiche bezüglich der Schutzfunktion gegenüber Chrom besonders vorteilhaft sind. Grundsätzlich kann aber auch ausschließlich solch ein Schichtaufbau zwischen Interkonnektor und Kathode sowohl als Schutzschicht, wie auch als Kontaktschicht eingesetzt werden. Insbesondere sollten in dieser Teilschicht keine Perowskit-Pulverpartikel enthalten sein.

Gemäß einer Weiterbildung können die in der Schicht enthaltenen Pulverpartikel zumindest in dem Bereich der zweiten Teilschicht zu einem Anteil von 50 Masse-% bis 99,8 Masse-% aus Perowskit-Pulverpartikeln, zu einem Anteil von 0,1 Masse-% bis 45 Masse-% aus Spinell-Pulverpartikeln und zu einem Anteil von 0,1 Masse-% bis 5 Masse-% aus Sinteradditiv-Pulverpartikeln gebildet sein. Der daraus erhaltene, keramische, gesinterte Schichtaufbau kann insbesondere eine Kontaktschicht bilden, da diese Zusammensetzungsbereiche im Hinblick auf eine möglichst gute Anbindung an die Kathode besonders vorteilhaft sind. Grundsätzlich kann aber auch ausschließlich solch eine Schicht zwischen Interkonnektor und Kathode sowohl als Schutzschicht, wie auch als Kontaktschicht eingesetzt werden.

Ein keramischer, gesinterter Schichtaufbau, der unter Verwendung eines erfindungsgemäßen Schichtaufbaus hergestellt worden ist, weist eine Spinell-Phase auf. Ferner ist zumindest abschnittsweise (bezüglich des Schichtverlaufs) eine Dicke von mindestens 10 µm und (in dem betreffenden, mindestens einen Abschnitt) über eine Dicke von mindestens 10 µm hinweg eine Porosität von ≤ 25 Vol.%, insbesondere von ≤ 20 Vol.%, eingehalten. Wobei dieser Bereich unmittelbar an die Oberfläche des Interkonnektors angrenzt. Ein solcher keramischer, gesinterter Schichtaufbau ist insbesondere durch Sintern des oberhalb beschriebenen, im Grünzustand vorliegenden Schichtaufbaus, der gegebenenfalls gemäß einer oder mehrerer der oberhalb beschriebenen Weiterbildungen und/oder Varianten ausgebildet sein kann, erhältlich (bzw. kann durch Sintern aus dieser erhalten werden). Wie oberhalb beschrieben ist, zeichnet sich der keramische, gesinterte Schichtaufbau insbesondere durch seine gute Schutzfunktion und eine gute, elektrische Leitfähigkeit aus. Eine Dicke des keramischen, gesinterten Schichtaufbaus von mindestens 10 µm mit einer Porosität ≤ 25 % kann insbesondere dadurch erreicht werden, dass zunächst eine entsprechend dicke Schicht im Grünzustand aufgetragen wird (z.B. im Bereich von 20 µm - 70 µm), wobei eine Volumenreduzierung dieser Schicht durch den Sintervorgang mit einzuberechnen ist. Weitere Details zu der Herstellung des keramischen, gesinterten Schichtaufbaus können den Abschnitten oberhalb zum Schichtaufbau im Grünzustand sowie dem unterhalb erläuterten Herstellungsverfahren für einen keramischen, gesinterten Schichtaufbau entnommen werden.

Gemäß einer Weiterbildung sollte der keramische, gesinterte Schichtaufbau zumindest abschnittsweise eine Dicke von mindestens 10 µm und über eine Dicke von mindestens 10 µm hinweg eine Porosität von ≤ 15 Vol.%, insbesondere von ≤ 10 Vol.% aufweisen. Solche besonders niedrigen Porositäten sollten bei erfindungsgemäßen, keramischen, gesinterten Schichtaufbauten, insbesondere in dem Höhen- bzw. Dickenbereich direkt angrenzend an die Grenzfläche zu dem Substrat (z.B. Interkonnektor), auftreten.

Es ist nicht zwingend erforderlich, dass der keramische, gesinterte Schichtaufbau über seinen gesamten Verlauf eine einheitliche Dicke aufweist. Insbesondere können Variationen der Dicke dann auftreten, wenn dieser keramische Schichtaufbau auf einem Substrat aufgebracht ist, das eine unebene Oberflächenkontur aufweist. Die Dicke des keramischen Schichtaufbaus sollte insbesondere über den gesamten Bereich ≤ 800 µm, vorzugsweise ≤ 100 µm betragen. Gemäß einer Weiterbildung sollte der keramische Schichtaufbau eine Dicke im Bereich von 20 um - 70 µm, insbesondere im Bereich von 20 µm - 50 µm aufweisen, wobei diese Dickebereiche zumindest im Bereich der stromleitenden Kontaktflächen vorliegen sollten. Insbesondere sollten sie durchgehend über den gesamten Schichtverlauf vorliegen. Bei den oberhalb angegebenen Dickenbereichen sollte insbesondere die Porosität zumindest über eine Dicke von mindestens 10 µm hinweg ≤ 25 Vol.%, insbesondere ≤ 20 Vol.% (abschnittsweise oder vorzugsweise über den gesamten Schichtverlauf hinweg) eingehalten werden. In den Bereichen zwischen den stromleitenden Kontaktflächen, insbesondere in den zwischen den Erhebungen ausgebildeten Vertiefungen, entlang derer das jeweilige Gas geleitet wird, kann die Dicke gegebenenfalls auch geringer oder alternativ auch höher (je nach Auftragungsverfahren) sein, als im Bereich der stromleitenden Kontaktflächen. Schichtdicken innerhalb der angegebenen Bereiche sind insbesondere hinsichtlich der Gewährleistung einer guten Schutzfunktion durch den keramischen Schichtaufbau, hinsichtlich der Robustheit des keramischen Schichtaufbaus, als auch hinsichtlich der Herstellung des keramischen Schichtaufbaus vorteilhaft. Schichten dieser Dicke können einfach, prozesssicher und kostengünstig dadurch hergestellt werden, dass eine Suspension oder Paste der jeweiligen Ausgangspulver hergestellt und diese dann auf das Substrat aufgetragen wird.

Bei erfindungsgemäß ausgebildeten, keramischen, gesinterten Schichtbauten konnte im Vergleich zu herkömmlichen, keramischen, gesinterten Schichten ein kleinerer, mittlerer Porendurchmesser erzielt werden. Gemäß einer Alternative zu den angegebenen maximalen Porositäten weist der keramische, gesinterte Schichtaufbau zumindest abschnittsweise und über eine Dicke von mindestens 10 µm hinweg einen mittleren Porendurchmesser von ≤ 1 µm, insbesondere von ≤ 0,8 µm, auf. Ein so erhaltener keramischer, gesinterter Schichtaufbau kann sehr kompakt und auch die darin enthaltenen Kristallite können relativ klein ausgebildet sein. Diese Eigenschaften sind insbesondere hinsichtlich der Schutzfunktion und hinsichtlich der elektrischen Leitfähigkeit vorteilhaft.

Ferner konnte bei erfindungsgemäßen, keramischen, gesinterten Schichtaufbauten im Vergleich zu herkömmlichen, keramischen, gesinterten Schichten eine kleinere, mittlere Korngröße der Spinell-Phase erzielt werden. Gemäß einer Weiterbildung kann im keramischen, gesinterten Schichtaufbau zumindest abschnittsweise (bezogen auf die keramische, gesinterte Schicht) und über eine Dicke von mindestens 10 µm hinweg die Spinell-Phase eine mittlere Korngröße von ≤ 2 µm, insbesondere von ≤ 1,5 µm aufweisen. Diese feinkristalline Ausbildung der Spinell-Phase ist vorteilhaft im Hinblick auf die Schutzfunktion und die elektrische Leitfähigkeit des keramischen, gesinterten Schichtaufbaus.

Gemäß einer Weiterbildung kann der keramische, gesinterte Schichtaufbau über die gesamte, mindestens 10 µm betragende Schichtdicke hinweg eine Porosität von ≤ 25 Vol.%, insbesondere von ≤ 20 Vol.%, aufweisen. Gemäß einer Weiterbildung können auch die oberhalb angegebenen Eigenschaften hinsichtlich des mittleren Porendurchmessers und/oder hinsichtlich der mittleren Korngröße der Spinell-Phase jeweils über die gesamte, mindestens 10 µm betragende Schichtdicke hinweg eingehalten werden. Gemäß einer Weiterbildung können diese Eigenschaften der Porosität, des mittleren Porendurchmessers und/oder der mittleren Korngröße der Spinell-Phase über den gesamten Schichtverlauf der keramischen, gesinterten Schicht vorliegen. Weist der keramische, gesinterte Schichtaufbau zwei oder mehrere Teilschichten auf (wie unterhalb im Detail erläutert wird), so liegen die oberhalb angegebenen Eigenschaften der Porosität, des mittleren Porendurchmessers und/oder der mittleren Korngröße der Spinell-Phase zumindest bei der (unterhalb im Detail erläuterten) ersten Teilschicht, die einen sehr kleinen Anteil bzw. zumindest nahezu keine Perowskit-Phase aufweist, vor.

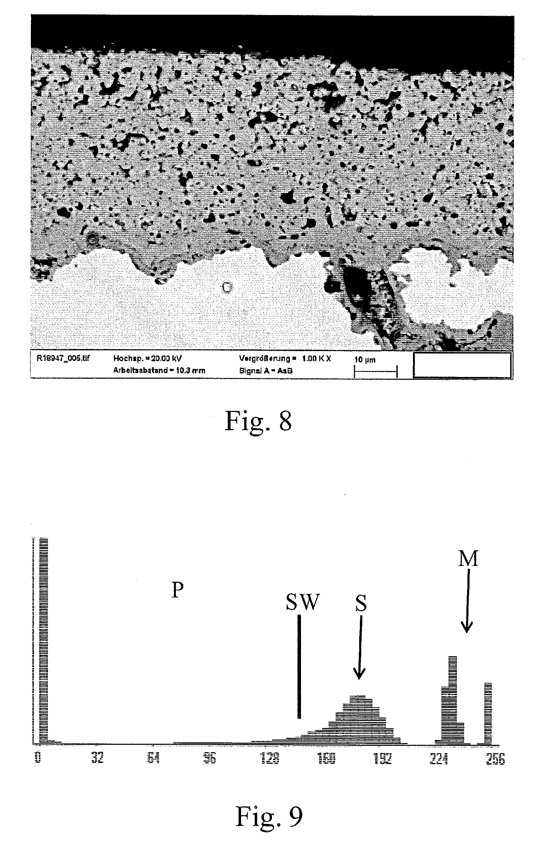

Die jeweils anwendbaren Messverfahren zur Bestimmung der Porosität, des mittleren Porendurchmessers und der mittleren Korngröße werden unterhalb, zum Teil unter Bezugnahme auf die Figuren 8 und 9, erläutert.

Gemäß einer Weiterbildung kann die Spinell-Phase gemäß der Formel (CuₓₛNi₁₋ₓₛ)_{ys}(Mn_{1-zs}Fe_{zs})₂O₄ mit 0 ≤ xs ≤ 1,0, 0,8 ≤ ys ≤ 1,2 und 0,0 ≤ zs ≤ 1,0 ausgebildet sein. Dabei kann nachfolgende Bedingung erfüllt sein: 0,5 ≤ xs ≤ 0,9, 0,8 ≤ ys ≤ 1,2 und 0,0 ≤ zs ≤ 0,5.

Gemäß einer Weiterbildung sollte die Zusammensetzung der Spinell-Pulverpartikel, die für die Schicht im Grünzustand verwendet werden, innerhalb des weiteren, insbesondere innerhalb des engeren, angegebenen Zusammensetzungsbereiches liegen.

Die eingesetzte Perowskit-Phase sollte aus einem nicht stöchiometrischen Perowskit gemäß der Formel (Ln^{p}₁₋ₓₚE^{p}ₓₚ)_{1-zp}M^{p}O_{3-δ} mit 0 ≤ xp ≤ 0,35, 0,0 ≤ zp ≤ 0,03 gebildet sein, wobei Ln^{p} mindestens ein Metall aus der Gruppe der Seltenerden (insbesondere aus der Gruppe Y, La) ist, E^{p} mindestens ein Metall aus der Gruppe der Erdalkalimetalle (insbesondere aus der Gruppe Ca, Sr) ist und M^{p} mindestens ein Metall aus der Gruppe der Übergangsmetalle (insbesondere aus der Gruppe Mn, Cu, Ni, Co und Fe) ist. "δ" repräsentiert dabei die Sauerstoff-Fehlstellen in dem Kristallgitter, die aus den Valenzen auf dem B^{p}-Gitterplatz und gegebenenfalls auch auf dem A^{p}-Gitterplatz der Perowskit-Kristallstruktur resultieren.

Die Zusammensetzung der Perowskit-Pulverpartikel, die für den Schichtaufbau im Grünzustand verwendet werden, sollte innerhalb des angegebenen Zusammensetzungsbereiches liegen.

Gemäß einer Weiterbildung kann der keramische, gesinterte Schichtaufbau zumindest eine Metalloxid-Phase aufweisen. Bei der Metalloxid-Phase handelt es sich um eine, von der oberhalb genannten Spinell-Phase und der oberhalb genannten Perowskit-Phase kristallographisch unterscheidbare Phase. Insbesondere wird sie durch eine feste Lösung von Metalloxiden gebildet, die grundsätzlich Metalle aus der Gruppe Seltenerden, Erdalkali und Übergangsmetalle aufweisen kann. Die feste Lösung weist insbesondere Metalloxide von mindestens zwei Metallen der in dem Sinteradditiv enthaltenen Metalle M^{a}, insbesondere von sämtlichen Metallen der in dem Sinteradditiv enthaltenen Metalle M^{a}, auf. Die Metalloxid-Phase selbst kann dabei, je nach Zusammensetzung und Anteile der Ausgangspulver, eine oder mehrere, kristallographische Phasen aufweisen. Dabei wird jede kristallographische Phase der Metalloxid-Phase insbesondere durch eine feste Lösung von Metalloxiden von mindestens zwei Metallen gebildet. Dabei kann eine Phase der Metalloxid-Phase grundsätzlich auch eine Perowskit-Kristallstruktur oder eine Spinell-Kristallstruktur aufweisen. Diese ist jedoch dadurch, dass die Metalloxid-Phase eine von der "Perowskit-Phase" und der "Spinell-Phase" unterschiedliche Zusammensetzung an Metallen aufweist, kristallographisch von den als "Perowskit-Phase" und als "Spinell-Phase" bezeichneten Phasen unterscheidbar. Die "Perowskit-Phase" wird nämlich bezüglich der Kristallstruktur und der Zusammensetzung weitgehend von den Perowskit-Pulverpartikeln geprägt. Entsprechend wird die "Spinell-Phase" bezüglich der Kristallstruktur und der Zusammensetzung weitgehend durch die Spinell-Pulverpartikel geprägt. Unter einer "festen Lösung von Metalloxiden von mindestens zwei Metallen" wird dabei verstanden, dass die Atome der mindestens zwei Metalle in der entsprechenden Mischoxid-Verbindung derart miteinander durchmischt sind, dass die Mischoxid-Verbindung eine einheitliche, kristallographische Phase bildet.

Gemäß einer Weiterbildung kann die Metalloxid-Phase gemäß der Formel ((Ln^{a}O_{1,5})₁₋ₓₐ(E^{a}O)ₓₐ)_{ya}-(CuO)_{za1}-(NiO)_{za2}-(CoO)_{za3}-(Fe₂O₃)_{za4}-(Mn₂O₃)_{0,5ya+za5} mit 0 ≤ xa ≤ 0,1, 0 ≤ ya ≤ 0,05, (za1+za2+za3) ≤ 1 und (za4+za5) ≤1 ausgebildet sein, wobei Ln^{a} mindestens ein Metall aus der Gruppe der Seltenerden ist und E^{a} mindestens ein Metall aus der Gruppe der Erdalkalimetalle ist. Die Metalle Ln^{a} und E^{a} werden insbesondere aus den Perowskit-Pulverpartikeln in die Metall-oxid-Phase eingebaut. Insbesondere handelt es sich um Elemente der Gruppe La, Y, Ca, Sr. Durch die Bindestriche zwischen den einzelnen Klammern wird ausgedrückt, dass die in den runden Klammern jeweils angegebenen Metalloxide nicht als Einzel-Metalloxide (und damit als einzelne, unterscheidbare, kristallographische Phasen) vorliegen, sondern dass diese jeweils eine feste Lösung mit mindestens einem weiteren Metalloxid eines weiteren Metalls bilden. Dabei können innerhalb der Formel genau eine oder auch mehrere kristallographische Phasen auftreten, wobei jede davon eine feste Lösung von Metalloxiden von mindestens zwei Metallen bildet.

Im Fall, dass der keramische, gesinterte Schichtaufbau zwei oder mehrere Phasen aufweist, so sind die Kristallite dieser Phasen vorzugsweise fein und im Wesentlichen statistisch innerhalb des keramischen, gesinterten Schichtaufbaus verteilt.

Gemäß einer Weiterbildung wird der keramische, gesinterte Schichtaufbau durch mindestens zwei, aufeinander ausgebildete Teilschichten gebildet, wobei die zweite Teilschicht einen höheren Anteil der Perowskit-Phase als die erste Teilschicht aufweist und dabei auch eine höhere Porosität aufweisen kann. Messungen an erfindungsgemäßen keramischen Schichtaufbauten mit zwei Teilschichten haben ergeben, dass die Porosität der zweiten Teilschicht, die eine Perowskit-Phase aufweist, in der Regel zumindest in dem Bereich der Porosität der ersten Teilschicht, die keine Perowskit-Phase aufweist, liegt. Die Porosität der zweiten Teilschicht sollte aber höher, als die der ersten Teilschicht, die auf der dem Interkonnektor zugewandten Seite liegt. Sie sollte insbesondere ≤ 50 Vol.% sein. In der ersten Teilschicht ist insbesondere der Anteil der Spinell-Phase zwischen 90 Vol.% und 99,8 Vol.%, der Anteil der Metalloxid-Phase zwischen 0,1 Vol.% und 5 Vol.% und der Anteil der Perowskit-Phase zwischen 0,1 Vol.% und 5 Vol.%. In der zweiten Teilschicht ist insbesondere der Anteil der Spinell-Phase zwischen 0,1 Vol.% und 50 Vol.%, der Anteil der Metalloxid-Phase zwischen 0,1 Vol.% und 5 Vol.% und der Anteil der Perowskit-Phase zwischen 50 und 99,8 Vol.%. Die zweite oder eine dritte Teilschicht kann gegebenenfalls auch ausschließlich durch eine Perowskit-Phase gebildet werden. Eine solche dritte Teilschicht kann dann unmittelbar an der Oberfläche der Kathode anliegen oder mit dieser Oberfläche verbunden sein.

Das anwendbare Messverfahren zur Bestimmung der jeweiligen Volumenanteile der verschiedenen Phasen wird unterhalb erläutert.

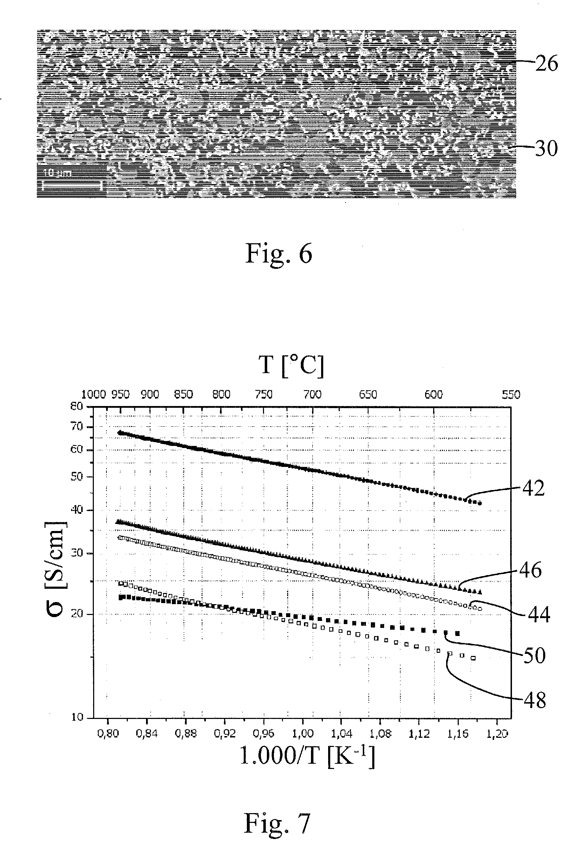

Gemäß einer Weiterbildung kann der keramische, gesinterte Schichtaufbau eine elektrische Leitfähigkeit von mindestens 25 S/cm (S: Siemens) bei einer Temperatur von 850 °C aufweisen. In Bezug auf das Messverfahren wird auf die Beschreibung von Fig. 7 verwiesen.

Bei der Herstellung können nachfolgende Schritte durchgeführt werden:
A) Herstellen einer Paste aus Pulverpartikeln und einer Flüssigkeit, wobei die Pulverpartikel zumindest Spinell-Pulverpartikel und Sinteradditiv-Pulverpartikel aufweisen und wobei das Sinteradditiv durch (ein) Metalloxid(e) von mindestens einem Metall M^{a} gebildet wird, wobei dabei mindestens eines der folgend genannten Oxide NiO, CuO, CoOₓ und MnOₓ enthalten ist/sind; und
B) Auftragen der Paste als Schicht auf ein Substrat, das durch einen Interkonnektor oder durch eine Kathode einer Hochtemperaturbrennstoffzelle gebildet wird.
C) Wiederholen der Schritte A) und B), wobei in der Paste Pulverpartikel zumindest Spinell-Pulverpartikel und Sinteradditiv-Pulverpartikel mit einem kleineren Anteil und zusätzlich Perowskit-Pulverpartikel enthalten sind, um eine zweite Teilschicht auszubilden.

Diese Verfahrensschritte können noch mehrfach wiederholt werden, wobei der Anteil an Spinell und Sinteradditiv sukzessive reduziert und der Anteil an Perowskit sukzessive erhöht wird.

Dadurch kann zunächst ein Schichtaufbau im Grünzustand hergestellt werden.

Bei der Herstellung wird der grünfeste Schichtaufbau bei einer Wärmebehandlung gesintert, um unter Verwendung des Schichtaufbaus einen keramischen, gesinterten Schichtaufbau zu erhalten.

Das Herstellungsverfahren hat den Vorteil, dass sowohl der Schichtaufbau im Grünzustand, als auch der keramische, gesinterte Schichtaufbau auf einfache Weise und kostengünstig herstellbar sind. Durch das Herstellen der Paste (bzw. Suspension) können die Ausgangspulver in einfacher Weise verarbeitet und schichtförmig auf ein Substrat auftragen werden. Es ist eine Fertigung in hohen Stückzahlen möglich. Dabei tritt nahezu kein Pulverausschuss auf. Der mit dem Herstellungsverfahren hergestellte, keramische, gesinterte Schichtaufbau weist ausgezeichnete Eigenschaften hinsichtlich der Schutzfunktion und der elektrischen Leitfähigkeit auf.

Gemäß einer Weiterbildung kann der Schritt des Sinterns nach dem Zusammenfügen zumindest des Interkonnektors, des Schichtaufbaus (im Grünzustand) und der Kathode, insbesondere nach Zusammenfügen eines gesamten Stapels von Hochtemperaturbrennstoffzellen (der mehrere Einzelzellen aufweist) erfolgen. Auf diese Weise erfolgt die Verbindung des Interkonnektors mit der Kathode und das Sintern des Schichtaufbaus in einem Schritt, was hinsichtlich der Effizienz der Herstellung und des Energieverbrauchs vorteilhaft ist. Gemäß einer alternativen Weiterbildung kann der Schritt des Sinterns separat erfolgen, indem ausschließlich das Substrat, insbesondere der Interkonnektor, zusammen mit dem Schichtaufbau gesintert werden. Bei dieser Weiterbildung können gegebenenfalls höhere Sintertemperaturen genutzt werden.

Die zur Herstellung der Paste verwendeten Pulverpartikel (Spinell-Pulverpartikel, Sinteradditiv-Pulverpartikel und gegebenenfalls Perowskit-Pulverpartikel) weisen insbesondere eine mittlere Korngröße im Bereich von 0 - 10 µm, insbesondere im Bereich von 1,5 - 3,5 µm auf. Die Flüssigkeit kann durch ein Lösungsmittel (z.B. Wasser, Ethanol, etc.) und/oder durch einen Binder gebildet werden. Nach dem Auftragen der Paste als Schicht (vgl. Schritt B)) kann zusätzlich ein Trocknungsschritt zur Verdampfung der flüssigen Bestandteile (insbesondere des Lösungsmittels) erfolgen, der je nach eingesetztem Lösungsmittel und/oder Binder auch bei leicht erhöhten Temperaturen (z.B. bei Temperaturen im Bereich von 50°C bis 150°C) durchgeführt werden kann. Der dadurch erhaltene Schichtaufbau (im Grünzustand) kann insbesondere dann, wenn ein Binder eingesetzt wird, relativ problemlos gehandhabt, insbesondere verpackt, verschickt, etc. werden. Gegebenenfalls können vor dem Schritt des Sinterns auch mehrere Teilschichten, wie dies oberhalb erläutert worden ist, die auch unterschiedliche Zusammensetzungen und/oder Anteile der Ausgangspulver aufweisen können, aufgetragen werden. Der Trocknungsschritt kann dabei nach Auftragen jeder Teilschicht durchgeführt werden.

Gemäß einer Weiterbildung kann zum Auftragen der Paste als Schicht (vgl. Schritt B)) ein Nasspulverspritzverfahren eingesetzt werden. Dabei wird insbesondere die flüssige Paste mit einer Düse (unter Zuführung von Druckluft) fein zerstäubt und auf das jeweilige Substrat (Interkonnektor und/oder Kathode) aufgetragen. Alternative Verfahren, mit denen das Auftragen der Paste als Schicht sehr gut und kostengünstig realisierbar ist, sind beispielsweise Siebdruckverfahren, Dip-Coating (Überziehen durch Eintauchen des Substrats), Roll-Coating (Walzenstreichen) und Tampon-Druckverfahren.

Durch die erfindungsgemäße Auswahl von niedrig sinternden Ausgangspulvern im Schichtaufbau (im Grünzustand) kann eine niedrig sinternde Zusammensetzung erreicht werden. Insbesondere kann bereits bei Sintertemperaturen im Bereich von 700 °C bis 950 °C eine stoffschlüssige Verbindung zwischen Kathode und Interkonnektor durch den Schichtaufbau erreicht werden. Ein geeigneter Bereich der Sintertemperaturen liegt insbesondere Zwischen 700 °C - 1.100 °C. Bevorzugt sind Temperaturen im Bereich von 800 °C - 1.050 °C. Das Sintern sollte in diesem Temperaturbereich über eine Dauer von 1 Stunde bis 20 Stunden, insbesondere über eine Dauer von 1 Stunde bis 5 Stunden durchgeführt werden.

Weitere Vorteile und Zweckmäßigkeiten der Erfindung ergeben sich anhand der nachfolgenden Beschreibung von Ausführungsbeispielen unter Bezugnahme auf die beigefügten Figuren.

Dabei zeigen:
- Fig. 1:: in schematischer Form einen Schichtaufbau, wie er beispielsweise gemäß Beispiel 2 herstellbar ist.
- Fig. 2:: eine schematische Teilansicht eines plattenförmigen Interkonnektors;
- Fig. 3:: eine Rasterelektronenmikroskop-Aufnahme einer, auf eines auf einen Interkonnektor aufgebrachten keramischen, gesinterten Schichtaufbaus im Querschnitt als Vergleichsdarstellung;
- Fig. 4:: eine schematische Darstellung des Aufbaus einer erfindungsgemäßen keramischen, gesinterten Schichtaufbaus gemäß einer Ausführungsform der Erfindung;
- Fig. 5:: eine Rasterelektronenmikroskop-Aufnahme (REM-Aufnahme) einer Ausführungsform einer ersten Teilschicht einer erfindungsgemäßen, auf einem Interkonnektor aufgebrachten, keramischen, gesinterten Schicht im Querschnitt;
- Fig. 6:: eine REM-Aufnahme einer Ausführungsform einer zweiten Teilschicht eines Beispiels eines erfindungsgemäßen, keramischen, gesinterten Schichtaufbaus im Querschnitt;
- Fig. 7:: ein Diagramm, in dem die elektrische Leitfähigkeit verschiedener Zusammensetzungen von keramischen Schichtaufbauten in Abhängigkeit von der Temperatur dargestellt ist;
- Fig. 8:: eine REM-Aufnahme eines Beispiels eines erfindungsgemäßen keramischen Schichtaufbaus zur Erläuterung des Messverfahrens; und
- Fig. 9:: ein Graustufenspektrum der in Fig. 7 dargestellten REM-Aufnahme zur Erläuterung des Messverfahrens.

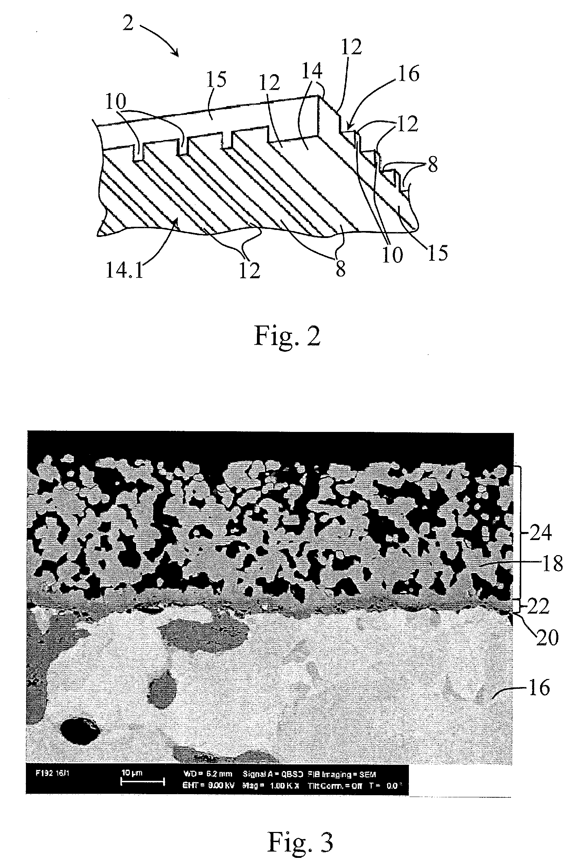

In Fig. 2 ist schematisch ein Teil eines plattenförmigen Interkonnektors 2 mit rechteckiger Grundform dargestellt. Die eine Fläche 14.1 des Interkonnektors 2 wird im Einsatz mit einer (nicht dargestellten) Kathode verbunden, während die andere Fläche 16 mit einer (nicht dargestellten) Anode verbunden wird. Die kathodenseitige und anodenseitige Gaszuführung wird bei dem Interkonnektor 2 dadurch erreicht, dass dieser beidseitig jeweils parallel zueinander verlaufende Kanäle 8 aufweist, die durch durchgehende Stege 10 voneinander unterteilt werden. Dabei verlaufen die Kanäle 8 der kathodenseitigen Fläche 14.1 im Wesentlichen senkrecht zu den Kanälen 8 der anodenseitigen Fläche 6. Bei dem dargestellten Aufbau des Interkonnektors 2 werden die stromleitenden Kontaktflächen durch die Deckflächen 12 der Stege 10 (und gegebenenfalls durch einen Teil oder die gesamten Flächen der Deckflächen 12 der etwas breiteren, den Rand bildenden Stege 14) gebildet, die nach Zusammenfügen des Stapels mehrerer Brennstoffzellen über eine dazwischen liegende Schicht mit der Kathode bzw. Anode verbunden werden. Wie bereits erläutert, überdeckt ein Schichtaufbau vorzugsweise die gesamte, kathodenseitige Oberfläche des Interkonnektors 2 (einschließlich der Kanäle 8, Stege-10, Deckflächen 12, etc.), die im Einsatz der oxidierenden Atmosphäre ausgesetzt ist. Gegebenenfalls können auch die Seitenflächen 15 des Interkonnektors 2 überdeckt werden.

Bei einer ausschließlich als Kontaktschicht eingesetzten Schicht dagegen ist ausreichend, dass diese nur die Deckflächen 12 überdeckt. In Bezug auf Fig. 2 wird angemerkt, dass alternativ zu den dargestellten, durchgehenden Stegen 10 auch anderweitige Konturen auf den Flächen 14.1, 16 des Interkonnektors 2 zur Verteilung des jeweiligen Gases über die jeweilige Fläche 14.1, 16, wie beispielsweise segmentierte Stege, Noppen oder anderweitige Erhebungen, eingesetzt werden können.

In Fig. 3 ist zum Vergleich eine REM-Aufnahme eines, auf einem Interkonnektor 2 aufgebrachten, keramischen, gesinterten Schicht 18 im Querschnitt dargestellt. Im Gegensatz zu einem keramischen, gesinterten Schichtaufbau gemäß der Erfindung wurden zur Herstellung dieser keramischen, gesinterten Schicht 18 als Ausgangspulver in der zugehörigen Schicht im Grünzustand ausschließlich Spinell-Pulverpartikel eines Cu-Ni-Mn-Spinells (Kupfer-Nickel-Mangan-Spinells) eingesetzt. Die durch Sintern der Schicht erhaltene, keramische, gesinterte Schicht 18 weist zu einem überwiegenden Anteil eine Spinell-Phase und zu einem geringeren Anteil eine oxidische Nebenphase einer manganhaltigen, oxidischen Verbindung auf.

Wie anhand der Fig. 3 erkennbar ist, weist sie direkt an der Grenzfläche 20 zu dem Interkonnektor 2 einen sehr dicht (d.h. mit niedriger Porosität) ausgebildeten Abschnitt/Bereich 22 auf, der jedoch relativ dünn ist. Darüber schließt sich ein relativ dick ausgebildeter Abschnitt/Bereich 24 an, der eine deutlich höhere Porosität aufweist.

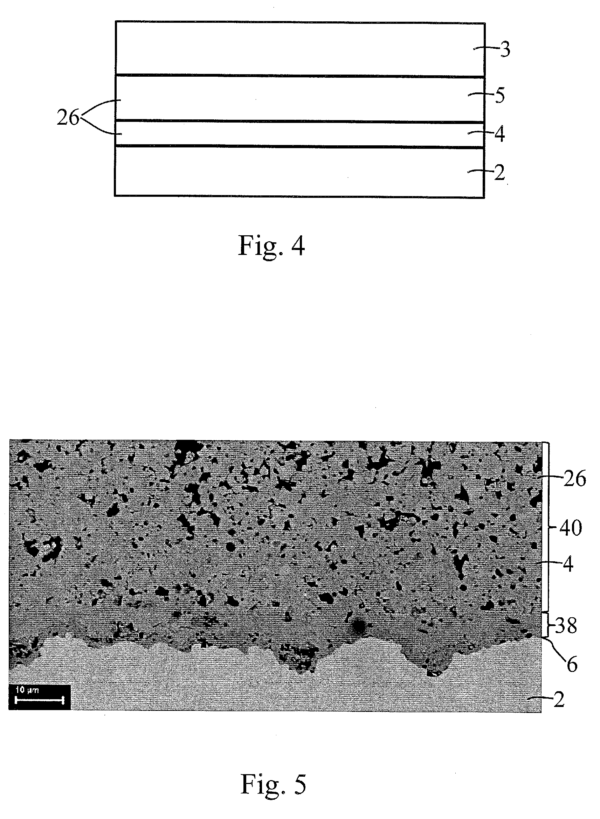

In Fig. 4 ist schematisch der Aufbau eines, keramischen, gesinterten Schichtaufbaus 26 gemäß einer Ausführungsform der Erfindung im Querschnitt dargestellt.

In den Fig. 5 und 6 sind dabei REM-Aufnahmen von Ausschnitten solch eines keramischen Schichtaufbaus 26 dargestellt. Dieser keramische Schichtaufbau 26 wird durch zwei aufeinander ausgebildete Teilschichten 4 und 5 gebildet. Die erste Teilschicht 4 ist direkt auf einem Interkonnektor 2 aufgebracht und bedeckt diesen über dessen gesamte, kathodenseitige Fläche, die der oxidierenden Atmosphäre ausgesetzt ist. Die zweite Teilschicht 5 ist auf der ersten Teilschicht 4 aufgebracht und überdeckt nur die stromleitenden Kontaktflächen des Interkonnektors 2 (beispielsweise die Deckflächen von Stegen des Interkonnektors 2). Die zweite Teilschicht 5 dient als Kontaktschicht.

Der Interkonnektor 2 ist aus einer Chrombasislegierung gebildet, die einen Anteil von mindestens 90 Masse-% Chrom aufweist. Die Kathode 3 ist aus Lanthan-Strontium-Manganoxid (LSM), das eine Perowskit-Kristallstruktur aufweist, gebildet. Zur Herstellung der ersten Teilschicht 4 wurden als Ausgangspulver Spinell-Pulverpartikel eines Cu-Ni-Mn-Spinells und Sinteradditiv-Pulverpartikeln von den nachfolgenden Einzel-Metalloxiden eingesetzt: CuO, NiO, Mn₂O₃. Daraus wurde eine Paste (durch Vermischung mit einem Binder und Lösungsmittel) hergestellt, diese als Schicht auf den Interkonnektor 2 aufgetragen und getrocknet. Zur Herstellung der zweiten Teilschicht 5 wurden als Ausgangspulver Spinell-Pulverpartikel eines Cu-Ni-Mn-Spinells, Perowskit-Pulverpartikel eines La-Sr-Mn-Perowskits (Lanthan-Strontium-Mangan-Perowskit) und Sinteradditiv-Pulverpartikel aus Co₃O₄ eingesetzt. Daraus wurde eine Paste (durch Vermischung mit einem Binder und Lösungsmittel) hergestellt, diese als Schicht auf den Interkonnektor 2 aufgetragen und getrocknet. Auf diese Schicht im Grünzustand wurde die
Kathode 3 aufgebracht und es wurde in Luft-Atmosphäre bei 950°C gesintert.

In Fig. 5 ist eine REM-Aufnahme eines auf einem Interkonnektor 2 aufgebrachten, keramischen, gesinterten Schichtaufbaus 26 im Querschnitt dargestellt, wobei in Fig. 5 nur die erste Teilschicht 4 in dem oberen Abschnitt sowie der Interkonnektor 2 in dem unteren Abschnitt dargestellt sind. Die keramische, gesinterte erste Teilschicht 4 wird ausschließlich durch eine SpinellPhase gebildet (abgesehen von gegebenenfalls als Verunreinigung bestehenden, weiteren Phasen). Sie weist direkt an der Grenzfläche 6 zu dem Interkonnektor 2 einen sehr dicht (d.h. mit sehr niedriger Porosität) ausgebildeten Abschnitt/Bereich 38 auf, der einen guten Stoffschluss zu dem Interkonnektor 2 herstellt. An diesen relativ dünnen Abschnitt/Bereich 38, der jedoch deutlich dicker als der entsprechende, in Fig. 3 dargestellte Abschnitt/Bereich 22 ausgebildet ist, schließt sich ein relativ dick ausgebildeter Abschnitt 40 an, der über mehr als 30 µm ebenfalls eine annähernd so niedrige Porosität wie der dünn ausgebildete Abschnitt/Bereich 38 und eine deutlich niedrigere Porosität als der entsprechende, in Fig. 3 dargestellte Abschnitt/Bereich 24 aufweist. Diese Eigenschaften sind sowohl hinsichtlich der Schutzfunktion als auch hinsichtlich der elektrischen Leitfähigkeit der ersten Teilschicht 4 vorteilhaft. In Fig. 6 ist eine REM-Aufnahme derzweiten Teilschicht 30 des keramischen, gesinterten Schichtaufbaus 26 dargestellt. Diese weist neben der Spinell-Phase auch eine Perowskit-Phase und eine Metalloxid-Phase auf. Sie weist eine etwas höhere Porosität als die erste Teilschicht 28 auf. Durch die Perowskit-Phase wird eine gute Materialanpassung und eine gute Anbindung des keramischen, gesinterten Schichtaufbaus 26 an die Kathode 3 ermöglicht.

Je nach Kathodenmaterial kann der erfindungsgemäße Schichtaufbau im Grünzustand, insbesondere einer direkt an die Kathode 3 angrenzenden Teilschicht, auch ein anderer Perowskit als Perowskit-Pulverpartikel zugesetzt sein, so dass sich dort im keramischen, gesinterten Schichtaufbau 26 eine, dem Kathodenmaterial vollständig oder weitgehend entsprechende Perowskit-Phase ausbildet. Gängige Kathodenmaterialien sind beispielsweise Lanthan-Strontium-Manganoxid (LSM), Lanthan-Strontium-Cobaltoxid (LSC) oder Lanthan-Strontium-Cobalt-Eisenoxid (LSCF), die jeweils eine PerowskitKristallstruktur aufweisen. Diese Materialien können entsprechend auch der, an der Kathode 3 angrenzenden Schicht (bzw. Teilschicht) als PerowskitPulverpartikel zugesetzt werden.

In Fig. 7 ist die elektrische Leitfähigkeit verschiedener gesinterter Schichtaufbauzusammensetzungen in Abhängigkeit von der Temperatur dargestellt. Dabei ist entlang der x-Achse auf der unteren Skala die Größe "1.000/Temperatur" in der Einheit K⁻¹ und auf der oberen Skala die Temperatur in der Einheit °C aufgetragen. Entlang der y-Achse ist die Leitfähigkeit σ in der Einheit S/cm (S: Siemens) aufgetragen. Als Proben für die Leitfähigkeitsmessungen wurden Schichten mit der jeweiligen Zusammensetzung auf einem Isolator hergestellt und die Leitfähigkeit wurde in einer Vierpunktmessung gemessen. Die vier Kontakte wurden dadurch gebildet, dass die Probe an den vier Kontaktstellen jeweils mit einem Platindraht umwickelt wurde und der Kontakt zu der Probe mit einem Kontaktmittel (z.B. eine Goldpaste) verbessert wurde. In Fig.7 wurde die mit 42 bezeichnete Messkurve an siebgedruckten, keramischen, gesinterten Schicht gemessen, die durch eine Spinell-Phase eines Cu-Ni-Mn-Fe-Spinells (Kupfer-Nickel-Mangan-Eisen-Spinell) gebildet wird und die bei 1.050°C für 3 Stunden gesintert wurde. Die mit 44 bezeichnete Messkurve wurde an einer, siebgedruckten, keramischen, gesinterten Schicht gemessen, die durch eine Spinell-Phase eines Cu-Ni-Mn-Fe-Spinells gebildet wird und die bei 950 °C für 3 Stunden gesintert wurde. Die elektrische Leitfähigkeit ist dabei etwas geringer als bei der Probe, die bei 1.050 °C gesintert wurde. Dabei ist zu berücksichtigen, dass die Sintertemperatur dann, wenn der Schichtaufbau im zusammengefügten Stapel, der zumindest den Interkonnektor, die Kathode und gegebenenfalls noch weitere Elemente der Brennstoffzelle aufweist, gesintert wird, in der Regel auf 950°C begrenzt ist. Die mit 46 bezeichnete Messkurve wurde an einem erfindungsgemäß erhaltenen, siebgedruckten, keramischen, gesinterten Schichtaufbau gemessen, die durch eine Spinell-Phase eines Cu-Ni-Mn-Fe-Spinells, eine Perowskit-Phase eines La-Sr-Mn-Perowskits und eine Metalloxid-Phase gebildet wird und die bei 950 °C für 3 Stunden gesintert wurde. Die mit 48 bezeichnete Messkurve wurde an einer siebgedruckten, keramischen, gesinterten Vergleichsschicht gemessen, die bei 1.050 °C für 3 Stunden gesintert wurde und die zu einem überwiegenden Anteil eine Spinell-Phase eines Cu-Ni-Mn-Spinells und zu einem geringeren Anteil eine oxidische Nebenphase einer manganhaltigen, oxidischen Verbindung aufweist. Die mit 50 bezeichnete Messkurve wurde an einer siebgedruckten, keramischen, gesinterten Schicht gemessen, die bei 950 °C für 3 Stunden gesintert wurde und die aus einer Perowskit-Phase eines La-Sr-Mn-Perowskits gebildet wird.

Wie anhand der Fig. 7 ersichtlich ist, ist bei den mit 48 und 50 bezeichneten Messkurven die elektrische Leitfähigkeit jeweils deutlich schlechter als bei den erfindungsgemäßen Schichtaufbauten.

Nachfolgend werden Ausführungsbeispiele zur Herstellung eines erfindungsgemäßen Schichtaufbaus erläutert.

### Beispiel 1:

Es werden 30 g eines Spinell-Pulvers mit der Zusammensetzung Cu_{0,6}Ni_{0,4}Mn₂O₄ und einer mittleren Partikelgröße zwischen 1,5 µm bis 3,5 µm mit 1,935 g eines Perowskit-Pulvers der Zusammensetzung La_{0,75}Sr_{0,2}Mn_{0,9}Co_{0,1}O_{3-δ} und einer mittleren Partikelgröße zwischen 1,5 µm bis 3,5 µm sowie 1,520 g CuO, 0,9516 g NiO und 5,0283 g Mn₂O₃ (Sinteradditiv-Pulver) in einer ethanolischen Lösung vermischt und anschließend auf einer Rollenbank bzw. in einer Planetenkugelmühle homogenisiert. Das homogene Pulver wird getrocknet und gesiebt. Das gesiebte Pulver wird mit einem terpineolhaltigen Lösungsmittel, dem zuvor Ethylzellulose als Binder zugesetzt wurde, gemischt und anschließend auf einem Drei-Walzen-Stuhl so homogenisiert, dass eine hochviskose, fließfähige Paste entsteht. Die Paste wird durch eine Dickschichttechnik, wie z.B. Sieb- bzw. Maskendruck oder Roll-Coating zumindest auf die Kontaktstege (stromleitende Kontaktflächen) des Interkonnektors 2 aufgebracht. Vorteilhaft ist jedoch die vollständige Beschichtung des Interkonnektors 2, bei der Kontaktstege und Gaskanäle beschichtet werden. Auch die Beschichtung von Bauteilkanten kann im Einzelfall zweckmäßig sein. Je nach Erfordernissen können Schichtdicken von 20 µm - 150 µm eingestellt werden. Während einer Trocknung bei 100 °C verdampft das terpinölhaltige Lösungsmittel und eine erste Teilschicht (im Grünzustand) aus Pulverpartikeln und dem Bindemittel Ethylzellulose kann so ausgebildet werden.

Auf dieser ersten Teilschicht 4 wird dann eine zweite Teilschicht 5 ausgebildet. Dafür werden 30 g eines Spinell-Pulvers mit der Zusammensetzung Cu_{0,6}Ni_{0,4}Mn₂O₄ und einer mittleren Partikelgröße zwischen 1,5 µm bis 3,5 µm mit 45,5 g eines Perowskit-Pulvers der Zusammensetzung La_{0,75}Sr_{0,2}Mn_{0,9}Co_{0,1}O_{3-δ} und einer mittleren Partikelgröße zwischen 1,5 µm bis 3,5 µm sowie 0,41 g CuO, 0,02 g NiO und 0,135 g Mn₂O₃ (Sinteradditiv-Pulver) eingesetzt, um eine Paste, wie zur ersten Teilschicht 4 beschrieben, herzustellen. Die zweite Teilschicht 5 kann genau, wie die erste Teilschicht und auf dieser oder ggf. auch der Oberfläche einer Kathode 3 ausgebildet werden.

Die Sinterung dieses Schichtaufbaus 26 kann je nach Erfordernissen als Abschluss der Interkonnektorfertigung oder im Rahmen der Stackfügung (Zusammenfügen des Stapels) erfolgen. Durch Sintern dieses Schichtaufbaus wird ein keramischer, gesinterter Schichtaufbau erhalten.

### Beispiel 2:

Als Ausgangswerkstoffe wurden La_{0.75}Sr_{0.2}MnO_{3.δ}, Cu_{0.6}Ni_{0.4}Mn₂O₄, und Metalloxide (CuO, Mn₂O₃, NiO, Co₃O₄) eingesetzt. Für die Herstellung einer ersten Teilschicht (4) wurden 30 g des Spinellpulvers mit der Zusammensatzung Cu_{0.6}Ni_{0.4}Mn₂O₄ mit einer mittleren Partikelgröße zwischen 1.5 µm bis 3.5 µm, mit 1.008 g CuO, 0.631 g NiO und 2.2347 g Mn₂O₃ in einer ethanolischen Lösung vermischt und anschließend auf einer Rollenbank bzw. in einer Planetenkugelmühle homogenisiert. Das homogene Pulver wurde getrocknet und gesiebt. Das gesiebte Pulver wird mit einem terpinölhaltigen Lösungsmittel, dem zuvor Ethylzellulose als Binder zugesetzt wurde, gemischt und anschließend auf einem Drei-Walzen-Stuhl so homogenisiert, dass eine hochviskose fließfähige Paste entstand. Die Paste wurde durch eine Dickschichttechnik, wie z.B. Sieb- bzw. Maskendruck oder Roll-Coating, auf die Gasstege eines Interkonnektors 2 aufgebracht. Vorteilhaft ist jedoch die vollständige Beschichtung des Interkonnektors 2, bei der Kontaktstege und Gaskanäle beschichtet werden. Die Dicke der Schicht sollte nach Beschichtung 20 µm - 200 µm sein.

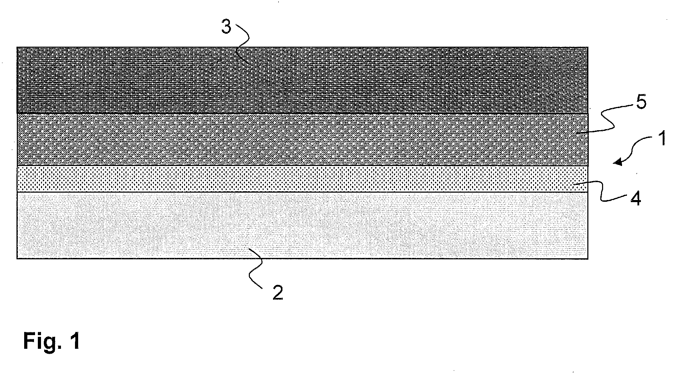

Für die Herstellung einer zweiten Teilschicht 5 wurden 20 g des Spinellpulvers mit Zusammensatzung Cu_{0.6}Ni_{0.4}Mn₂O₄ (mit einer mittleren Partikelgröße zwischen 1.5 µm bis 3.5 µm) mit 24.5335 g La_{0.75}Sr_{0.2}MnO_{3-δ} (mit einer mittleren Partikelgröße zwischen 1.5 µm bis 3.5 µm) und 2.42 g Co₃O₄ in einer ethanolischen Lösung vermischt und anschließend auf einer Rollenbank bzw. in einer Planetenkugelmühle homogenisiert. Das homogene Pulver wurde getrocknet und gesiebt. Das gesiebte Pulver wurde mit einem terpinölhaltigen Lösungsmittel, dem zuvor Ethylzellulose als Binder zugesetzt worden sind, gemischt und anschließend auf einem Drei-Walzen-Stuhl so homogenisiert, dass eine hochviskose fließfähige Paste entstand. Die Paste wurde durch eine Dickschichttechnik, wie z.B. Sieb- bzw. Maskendruck oder Roll-Coating, auf Kathode einer Brennstoffzelle aufgebracht. Vorteilhaft ist jedoch die vollständige Beschichtung. Die Dicke der Schicht sollte nach Beschichtung vorteilhafterweise im Bereich 20 µm - 100 µm liegen. Ein solcher Schichtaufbau 1 ist in Figur 1 mit den beiden Teilschichten 4 und 5 schematisch gezeigt.

Nach dem Trocknen der Schichtaufbauten 1 wurden die vorbereiteten Interkonnektorplatten und beschichteten Brennstoffzellen abwechselnd zu einem Stapel (Stack) zusammengesetzt. Nach dem Einsetzen auf eine Metallplatte mit Gasversorgungseinrichtung wurde dieser Stapel auf 800 °C - 950 °C, vorzugsweise 930 °C, für 2 Stunden bis 6 Stunden aufgeheizt und war dann einsatzfähig.

Nachfolgend werden Messverfahren zur Bestimmung der Porosität, des mittleren Porendurchmessers, der Anteile der jeweiligen Phasen der keramischen, gesinterten Schicht sowie zur Bestimmung der mittleren Korngröße der Spinell-Phase des keramischen, gesinterten Schichtaufbaus erläutert. Diese Messverfahren sind insbesondere in Bezug auf die jeweils angegebenen Bereichsangaben und Grenzwerte anzuwenden. Zunächst wird eine Probenpräparation, die für sämtliche Messverfahren anwendbar ist, beschrieben. Es werden hierzu Querschliffe von Interkonnektoren, die jeweils mit einem erfindungsgemäßen, keramischen, gesinterten Schichtaufbau beschichtet sind, senkrecht zu deren Oberfläche (und senkrecht zu der Schichtebene) hergestellt. Dazu wurden mittels einer Diamantdrahtsäge Stücke aus einem Interkonnektor herausgesägt, diese Stücke wurden in einem Einbettmittel (beispielsweise Epoxidharz) fixiert und nach Aushärtung geschliffen (sukzessive mit jeweils feinerem Schleifpapier). Anschließend wurden die Proben mit einer Poliersuspension poliert und final elektrolytisch poliert. Für die nachfolgende Analyse am REM wurde eine sehr dünne Goldschicht über einen Sputterprozess aufgetragen und somit eine elektrisch leitfähige Schliffoberfläche erzeugt.

Nachfolgend wird das Messverfahren zur Bestimmung der Anteile der jeweiligen Phasen (in Vol.%) innerhalb des keramischen, gesinterten Schichtaufbaus beschrieben. Diese Bestimmung erfolgt mittels einer EBSD-Analyse (EBSD: electron backscatter diffraction; deutsch: Elektronenbeugung), durch die sich lokal die kristallographische Struktur sowie die wahrscheinliste Orientierung der einzelnen Kristallite bestimmen lässt. Es wird hierzu eine Aufnahme einer Probe mit einem hochauflösenden Rasterelektronenmikroskop (REM) mit einem EBSD-Detektor aufgenommen (vorliegend verwendetes REM: "Ultra Plus 55" der Firma Zeiss). Dazu wird die Probe unter einem Kippwinkel von 70° unter dem Primärelektronenstrahl positioniert. Im Zuge der Wechselwirkung mit der Probe wird ein Teil der Elektronen gebeugt. Der EBSD-Detektor registriert diese Elektronen und stellt ein Beugungsbild dar. In einer Datenbank werden die zu erwartenden, kristallographischen Phasen ausgewählt, wobei zu jeder dieser Phasen die möglichen Beugungsbilder hinterlegt sind. Jedem Messpunkt auf der Probe kann auf diese Weise durch den Abgleich mit der Datenbank die kristallographische Phase und die wahrscheinlichste Orientierung zugewiesen werden. Durch Abrastern (bzw. Scannen) der Probe kann eine Karte der Phasen im keramischen, gesinterten Schichtaufbau erstellt werden. Aus diesen Bildern kann mittels stereologischer Verfahren der Flächenanteil der einzelnen Phasen ermittelt werden. Bei der Bestimmung des Flächenanteils der einzelnen Phasen werden die Poren nicht berücksichtigt. Der bestimmte Flächenanteil einer Phase entspricht gleichzeitig dem Anteil in Vol.% dieser Phase.

Das Messverfahren zur Bestimmung der mittleren Korngröße der Spinell-Phase des keramischen, gesinterten Schichtaufbaus wird mit den gleichen, oberhalb (in Bezug auf das Messverfahren zur Bestimmung der Anteile der jeweiligen Phasen) erläuterten Einstellungen und gegebenenfalls auch an der gleichen REM-Aufnahme durchgeführt. Es werden hierzu in der REM-Aufnahme ausschließlich die Bereiche ausgewertet, in denen die Spinell-Phase vorliegt. Die Bestimmung der mittleren Korngröße der Spinell-Phase innerhalb dieser Bereiche wird unter Verwendung des Software-Moduls "QX-Grain" gemäß ASTM E112-96 durchgeführt.

Nachfolgend werden unter Bezugnahme auf die Figuren 7 und 8 Messverfahren zur Bestimmung der Porosität und des mittleren Porendurchmessers eines keramischen, gesinterten Schichtaufbaus erläutert. Es wird eine REM-Aufnahme der zu untersuchenden Probe aufgenommen, wobei vorliegend das oberhalb angegebene REM und ein BSE-Detektor (BSE: back-scatteredelectrons; deutsch: rückgestreute Elektronen) (BSE-Detektor bzw. 4-Quadranten-Ring-Detektor) verwendet wurden. Die verwendeten Einstellungen sind wie folgt: Kippwinkel: 0°, Beschleunigungsspannung von 20 kV, Arbeitsabstand von ca. 10 mm und 1.000-fache Vergrößerung (Geräteangabe), was in einer horizontalen Bildkante von etwa 150 µm resultiert. Dabei wurde besonderer Wert auf eine sehr gute Bildschärfe gelegt. Wesentliche Einflussfaktoren auf die Messgrößen der Porosität und des mittleren Porendurchmessers ist die Einstellung der Helligkeit und des Kontrastes in der REM-Aufnahme und die Festlegung des Schwellwertes. Die Einstellung dieser Parameter erfolgt, wie nachfolgend erläutert wird. Die REM-Aufnahme umfasst zu jeweils im Wesentlichen gleichen Anteilen ein unterhalb der Schicht befindliches, metallisches Substrat und ein oberhalb der Schicht befindliches Einbettmittel, wie dies beispielsweise anhand der in Fig. 8 gezeigten REM-Aufnahme eines erfindungsgemäß erhaltenen keramischen, gesinterten Schichtaufbaus dargestellt ist. Helligkeit und Kontrast wurden so gewählt, dass das gesamte Graustufenspektrum mit 256 Stufen optimal ausgenutzt wird. Dies ist anhand der Fig. 9 ersichtlich, in welcher der im Wesentlichen Gauss-Kurven-förmige Peak -S- durch den Beschichtungswerkstoff des keramischen, gesinterten Schichtaufbaus, die beiden Peaks -M- im hohen Graustufenbereich (entspricht hoher Helligkeit) durch das metallische Substrat (vorliegend: Interkonnektor) und die Intensitäten -P- unterhalb des Schwellwertes -SW- durch die (zumindest teilweise) mit Einbettmittel ausgefüllten Poren sowie durch das, oberhalb des keramischen, gesinterten Schichtaufbaus vorgesehene Einbettmittel gebildet werden. Der mittlere Graustufenwert der gesamten REM-Aufnahme lag bei den durchgeführten Messungen immer im Bereich zwischen 150 und 200, in der Regel innerhalb des engeren Bereiches von 170 bis 190.
Zur Ermittlung der Position des Schwellwertes wird wie folgt vorgegangen. Es wird eine Gauss-Kurve in die Intensitätsverteilung -S- des Beschichtungswerkstoffes derart gelegt, dass diese Gauss-Kurve an die in Fig.9 rechts gelegene Flanke der Intensitätsverteilung (d.h. die Flanke hellerer Graustufen) gefittet (bzw. angepasst) wird. Wie anhand der Fig. 9 ersichtlich ist, ist die linke Flanke (entspricht Flanke dunklerer Graustufen) der Intensitätsverteilung -S- des Beschichtungswerkstoffes asymmetrisch und nimmt in deren Auslauf höhere Intensitätswerte als die rechte Flanke ein. Diese, gegenüber der rechten Flanke erhöhte Intensität wird bereits durch die, in der jeweiligen Schicht enthaltenen Poren verursacht. Dementsprechend ist der Schwellwert -SW- so zu bestimmen, dass die, durch die Poren verursachte Asymmetrie der linken Flanke mit zur Bestimmung der Porosität und des mittleren Porendurchmessers berücksichtigt wird, nicht aber der, durch den Beschichtungswerkstoff bedingte Anteil an der Intensität. Dies erfolgt dadurch, dass der Schwellwert-SW- derart in die linke Flanke der Intensitätsverteilung -S- des Beschichtungswerkstoffes gelegt wird, dass die Gauss-Kurve, die wie oberhalb angegeben in die Intensitätsverteilung des Beschichtungswerkstoffes gelegt wurde, auf der Seite der linken Flanke zumindest auf 0,5% des Maximalwertes der Intensitätsverteilung -S- des Beschichtungswerkstoffes abgefallen sein muss. Durch Bestimmung des Schwellwertes -SW- werden sämtliche Bereiche innerhalb der auszuwertenden Messfläche, die eine Graustufe unterhalb des Schwellwertes -SW- aufweisen (d.h. dunkler als der Schwellwert sind), als Pore identifiziert und zur Ermittlung der Porosität (und des mittleren Porendurchmessers) herangezogen. Der Schwellwert ist dabei für jede REM-Aufnahme gesondert festzulegen. Die auszuwertende Messfläche, die in der Regel rechteckförmig ist, wird in der REM-Aufnahme vollständig innerhalb des, vom keramischen, gesinterten Schichtaufbau abgedeckten Bereichs gelegt. Sie umfasst insbesondere die gesamte Breite der REM-Aufnahme (d.h. 150 µm). Ihre Höhe entspricht dem Höhenbereich, über den die Porosität bzw. der mittlere Porendurchmesser (oder auch eine anderweitige Größe) zu bestimmen ist. Ist beispielsweise zu bestimmen, ob der keramische, gesinterte Schichtaufbau über eine Dicke von mindestens 10 µm hinweg eine Porosität und/oder einen mittleren Porendurchmesser unterhalb eines jeweiligen Grenzwertes aufweist, so kann die auszuwertende Messfläche insbesondere eine Höhe von 10 µm (oder geringfügig mehr) aufweisen und durch Positionieren der auszuwertenden Messfläche in verschiedenen Höhen- bzw. Dickenbereichen des keramischen, gesinterten Schichtaufbaus kann überprüft werden, ob diese Eigenschaften in zumindest einem Höhen- bzw. Dickenabschnitt innerhalb des keramischen, gesinterten Schichtaufbaus vorliegen. Die REM-Aufnahme wird innerhalb der auszuwertenden Messfläche jeweils mittels stereologischer Methoden quantitativ ausgewertet (verwendete Software: "Leica QWin").

Bei dem Messverfahren zur Ermittlung der Porosität werden auch die Poren mit berücksichtigt, die nur partiell innerhalb der auszuwertenden Messfläche liegen. Im Rahmen der Porositätsmessung wird der Flächenanteil der Poren relativ zu der gesamten, auszuwertenden Messfläche bestimmt. Dieser Flächenanteil entspricht gleichzeitig der Porosität in Vol.%. Die Bestimmung des mittleren Porendurchmessers wird unter Verwendung des Software-Moduls "QX-Grain" gemäß ASTM E112-96 durchgeführt.

## Patentansprüche

1. Schichtaufbau, der zwischen einem Interkonnektor und einer Kathode einer Hochtemperaturbrennstoffzelle ausgebildet ist, wobei der Interkonnektor (2) aus einer chromhaltigen Metalllegierung besteht, und der Schichtaufbau (1) im Grünzustand
mit einem pulverförmigen Spinell sowie
mindestens eines der folgend genannten Metalloxide CuO, NiO, CoOₓ und MnOₓ als Sinteradditiv, und
mindestens einem pulverförmigen Perowskit gebildet ist, dabei
in keiner dieser chemischen Verbindungen Chrom enthalten sind und wobei
der Anteil an enthaltenem Spinell mit den Metalloxiden als Sinteradditiv ausgehend von der dem Interkonnektor (2) zugewandten Seite bis zur der Kathode (3) zugewandten Seite verringert und der Anteil an Perowskit ausgehend von der der Kathode (3) zugewandten Seite in Richtung der dem Interkonnektor (2) zugewandten Seite ebenfalls verringert ist.

2. Schichtaufbau nach Anspruch 1, **dadurch gekennzeichnet, dass** der Schichtaufbau aus mindestens zwei Teilschichten (4, 5) mit unterschiedlicher Konsistenz gebildet ist.

3. Schichtaufbau nach Anspruch 1 oder 2, **dadurch gekennzeichnet, dass** als Perowskit ein nichtstöchiometrisches Perowskit eingesetzt ist, bei dem der A^{p} -Gitterplatz der Perowskit-Kristallstruktur A^{p}a^{p}O₃ mit mindestens einem Metall aus der Gruppe der chemischen Elemente La, Sr, Ca und Y besetzt ist und der B^{p} -Gitterplatz mit mindestens einem Metall der Gruppe der chemischen Elemente Mn, Ni, Co und Fe besetzt ist.

4. Schichtaufbau nach einem der vorhergehenden Ansprüche, **dadurch gekennzeichnet, dass** als Spinell (CuₓₛNi₁₋ₓₛ)_{ys}(Mn_{1-zs}Fe_{zs})₂O₄ mit 0 ≤ xs ≤ 1,0, 0,8 ≤ ys ≤ 1,2 und 0,0 ≤ zs ≤ 1,0 enthalten ist.

5. Schichtaufbau nach einem der vorhergehenden Ansprüche, **dadurch gekennzeichnet, dass** als Perowskit (Ln^{p}₁₋ₓₚE^{p}ₓₚ)_{1-zp}M^{p}O_{3-δ} mit 0 ≤ xp ≤ 0,35, 0,0 ≤ zp ≤ 0,03 enthalten ist, wobei Ln^{p} mindestens ein Metall aus der Gruppe der Seltenerden ist, E^{p} mindestens ein Metall aus der Gruppe der Erdalkalimetalle ist und M^{p} mindestens ein Metall aus der Gruppe der Übergangsmetalle ist; wobei
δ die Sauerstoff-Fehlstellen in dem Kristallgitter, die aus den Valenzen auf dem B^{p}-Gitterplatz und gegebenenfalls auch auf dem A^{p}-Gitterplatz der Perowskit-Kristallstruktur resultieren, repräsentiert.

6. Schichtaufbau nach einem der vorhergehenden Ansprüche, **dadurch gekennzeichnet, dass** der Schichtaufbau (1) an der dem Interkonnektor (2) zugewandten Seite oder einer ersten dort angeordneten erstenTeilschicht (4) einen Anteil von 65 Masse-% bis 95,9 Masse-% von Spinell-Pulverpartikeln, einen Anteil von 4 Masse-% bis 29 Masse-% Sinteradditiv-Pulverpartikeln und einen Anteil von 0,1 Masse-% bis 6 Masse-% Perowskit-Pulverpartikeln aufweist.

7. Schichtaufbau nach einem der vorhergehenden Ansprüche, **dadurch gekennzeichnet, dass** der Schichtaufbau (1) an der der Kathode (3) zugewandten Seite oder in einer zweiten Teilschicht (5) einen Anteil von 0,1 Masse-% bis 45 Masse-% von Spinell-Pulverpartikeln, einen Anteil von 0,1 Masse-% bis 0,5 Masse-% Sinteradditiv-Pulverpartikeln und einen Anteil von 50 Masse-% bis 99,8 Masse-% Perowskit-Pulverpartikeln aufweist.

8. Schichtaufbau nach einem der vorhergehenden Ansprüche, **dadurch gekennzeichnet, dass** der unmittelbar an der Kathode (3) anliegende Bereich des Schichtaufbaus (1) oder eine dritte dort angeordnete Teilschicht ausschließlich mit Perowskit gebildet ist.

9. Schichtaufbau nach einem der vorhergehenden Ansprüche, **dadurch gekennzeichnet, dass** im Schichtaufbau(1) Perowskit enthalten ist, der dem Kathodenwerkstoff entspricht.

10. Verwendung eines Schichtaufbaus nach einem der vorhergehenden Ansprüche zur Ausbildung eines keramischen Schichtaufbaus (26) zwischen einem Interkonnektor (2) und einer Kathode (3) einer Hochtemperaturbrennstoffzelle nach einer Sinterung, der mit einer Spinellphase und mindestens einer Perowskitphase gebildet ist, dabei der Anteil an enthaltenem Spinell ausgehend von der dem Interkonnektor (2) zugewandten Seite bis zur der Kathode (3) zugewandten Seite verringert und der Anteil an Perowskit ausgehend von der der Kathode (3) zugwandten Seite in Richtung der dem Interkonnektor (2) zugewandten Seite ebenfalls verringert ist und der Schichtaufbau (1) im Grenzflächenbereich (20) zum Interkonnektor (2) weisend über eine Dicke von mindestens 10 µm eine Porosität ≤ 25 % und/oder einen mittleren Porendurchmesser ≤ 1 µm aufweist.

11. Verwendung nach dem vorhergehenden Anspruch, **dadurch gekennzeichnet, dass** die Porosität des keramischen Schichtaufbaus (26) in Richtung der Kathode (3) größer wird.

12. Verwendung nach den beiden vorhergehenden Ansprüchen, **dadurch gekennzeichnet, dass** im Anschluss an den Grenzflächenbereich (20) in Richtung der Kathode (3) weisend mit mindestens zwei Teilschichten (4, 5) gebildet ist.

13. Verwendung nach den drei vorhergehenden Ansprüchen, **dadurch gekennzeichnet, dass** die Spinell-Phase gemäß der Formel (CuₓₛNi₁₋ₓₛ)_{ys}(Mn_{1-zs}Fe_{zs})₂O₄ mit 0 ≤ xs ≤ 1,0,0,8 ≤ ys ≤ 1,2 und 0,0 ≤ zs ≤ 1,0 ausgebildet wird.

14. Verwendung nach den vier vorhergehenden Ansprüchen, **dadurch gekennzeichnet, dass** die Perowskit-Phase aus einem nicht stöchiometrischen Perowskit gemäß der Formel (Ln^{p}₁₋ₓₚE^{p}ₓₚ)_{1-zp}M^{p}O_{3-δ} mit 0 ≤ xp ≤ 0,35, 0,0 ≤ zp ≤ 0,03 ausgebildet wird, wobei bei der Perowskitphase Ln^{p} mindestens ein Metall aus der Gruppe der Seltenerden ist, E^{p} mindestens ein Metall aus der Gruppe der Erdalkalimetalle ist und M^{p} mindestens ein Metall aus der Gruppe der Übergangsmetalle ist; wobei
δ die Sauerstoff-Fehlstellen in dem Kristallgitter, die aus den Valenzen auf dem B^{p}-Gitterplatz und gegebenenfalls auch auf dem A^{p}-Gitterplatz der Perowskit-Kristallstruktur resultieren, repräsentiert.

15. Verwendung nach den fünf vorhergehenden Ansprüchen, **dadurch gekennzeichnet, dass** eine Metalloxid-Phase gemäß der Formel ((Ln^{a}O_{1,5})₁₋ₓₐ(E^{a}O)ₓₐ)_{ya}-(CuO)_{za1}-(NiO)_{za2}(CoO)_{za3}-(Fe₂O₃)_{za4}-(Mn₂O₃)_{0,5ya+za5} mit 0 ≤ xa ≤ 0,1, 0 ≤ ya ≤ 0,05, (za1+za2+za3) ≤ 1 und (za4+za5) ≤1, bevorzugt als feste Lösung von Metalloxiden, ausgebildet wird, wobei Ln^{a} mindestens ein Metall aus der Gruppe der Seltenerden ist und E^{a} mindestens ein Metall aus der Gruppe der Erdalkalimetalle ist.

16. Verwendung nach den sieben vorhergehenden Ansprüchen, **dadurch gekennzeichnet, dass** der mit dem Schichtaufbau (1) hergestellte keramische Schichtaufbau (26) in einem Grenzflächenbereich (22) Chrom in chemisch gebundener Form enthält.

## Claims

1. A layer structure which is formed between an interconnect and a cathode of a solid oxide fuel cell, wherein the interconnect (2) comprises a metal alloy containing chromium and the layer structure (1) is formed in the green state
by a powdery spinel as well as
at least one of the below-named metal oxides CuO, NiO, CoOₓ and MnOₓ as a sintering additive, and
at least one powdery perovskite, in this respect
chromium is not contained in any of these chemical compounds, and wherein
the portion of spinel contained with the metal oxides as a sintering additive reduces starting from the side facing the interconnect (2) up to the side facing the cathode (3) and the portion of perovskite is likewise reduced starting from the side facing the cathode (3) in the direction of the side facing the interconnect (2).

2. A layer structure in accordance with claim 1, **characterized in that** the layer structure is formed from at least two part layers (4, 5) having different consistencies.

3. A layer structure in accordance with claim 1 or claim 2, **characterized in that** a non-stoichiometric perovskite is used as the perovskite in which the A^{p} lattice site of the perovskite crystal structure A^{p}B^{p}O₃ is occupied by at least one metal from the group of chemical elements La, Sr, Ca and Y and the B^{p} lattice site is occupied by at least one metal of the group of chemical elements Mn, Ni, Co and Fe.

4. A layer structure in accordance with one of the preceding claims, **characterized in that** CuₓₛNi₁₋ₓₛ)_{ys}(Mn_{1-zs}Fe_{zs})₂O₄, where 0 ≤ xs ≤ 1.0, 0.8 ≤ ys ≤ 1.2 and 0.0 ≤ zs ≤ 1.0, is contained as the spinel.

5. A layer structure in accordance with one of the preceding claims, **characterized in that** (Ln^{p}₁₋ₓₚE^{p}ₓₚ)_{1-zp}M^{p}O_{3-δ}, where 0 ≤ xp ≤ 0.35, 0.0 ≤ zp ≤ 0.03 is contained as the perovskite, wherein Ln^{p} is at least one metal from the group of rare earths, E^{p} is at least one metal from the group of alkaline earth metals and M^{p} is at least one metal from the group of transition metals, wherein δ represents the oxygen vacancies in the crystal lattice, which are result from the valences on the B^{p}-lattice site and if applicable also on the A^{p}-lattice site of the perovskit crystal structure.

6. A layer structure in accordance with one of the preceding claims, **characterized in that** the layer structure (1) has a portion of 65% by mass to 95.9% by mass of spinel powder particles, a portion of 4% by mass to 29% by mass of sintering additive powder particles and a portion of 0.1% by mass to 6% by mass of perovskite powder particles at the side facing the interconnect (2) or at a first part layer (4) arranged there.

7. A layer structure in accordance with one of the preceding claims, **characterized in that** the layer structure (1) has a portion of 0.1% by mass to 45% by mass of spinel powder particles, a portion of 0.1% by mass to 0.5% by mass of sintering additive powder particles and a portion of 50% by mass to 99.8% by mass of perovskite powder particles at the side facing the cathode (3) or in a second part layer (5).

8. A layer structure in accordance with one of the preceding claims, **characterized in that** the region of the layer structure (1) directly contacting the cathode (3) or a third part layer arranged there is formed only with perovskite.

9. A layer structure in accordance with one of the preceding claims, **characterized in that** perovskite which corresponds to the cathode material is contained in the layer structure (1).

10. Use of a layer structure in accordance with one of the preceding claims for forming a ceramic layer structure (26) between an interconnect (2) and a cathode (3) of a solid oxide fuel cell after a sintering which ceramic layer structure is formed with a spinel phase and at least one perovskite phase, in this respect
the portion of spinel contained is reduced starting from the side facing the interconnect (2) up to the side facing the cathode (3) and the portion of perovskite is likewise reduced starting from the side facing the cathode (3) in the direction of the side facing the interconnect (2) and the layer structure (1) in the interface region (20) facing toward the interconnect (2) has a porosity ≤ 25% and/or a mean pore diameter ≤ 1 µm over a thickness of at least 10 µm.

11. Use in accordance with the preceding claim, **characterized in that** the porosity of the ceramic layer structure (26) becomes larger in the direction of the cathode (3).

12. Use in accordance with the two preceding claims, **characterized in that** with at least two part layers (4, 5) are formed subsequent to the interface region (20) facing in the direction of the cathode (3).

13. Use in accordance with the three preceding claims, **characterized in that** the spinel phase is formed in accordance with the formula (CuₓₛNi₁₋ₓₛ)_{ys}(Mn_{1-zs}Fe_{zs})₂O₄, where 0 ≤ xs ≤ 1.0, 0.8 ≤ ys ≤ 1.2 and 0.0 ≤ zs ≤ 1.0.

14. Use in accordance with the four preceding claims, **characterized in that** the perovskite phase is formed from a non-stoichiometric perovskite in accordance with the formula (Ln^{p}₁₋ₓₚE^{p}ₓₚ)_{1-zp}M^{p}O_{3-δ}, where 0 ≤ xp ≤ 0.35, 0.0 ≤ zp ≤ 0.03, wherein, in the perovskite phase, Ln^{p} is at least one metal from the group of rare earths, E^{p} is at least one metal from the group of alkaline earth metals and M^{p} is at least one metal from the group of transition metals, wherein δ represents the oxygen vacancies in the crystal lattice, which are result from the valences on the B^{p}-lattice site and if applicable also on the A^{p}-lattice site of the perovskit crystal structure.

15. Use in accordance with the five preceding claims, **characterized in that** the metal oxide phase is formed in accordance with the formula ((Ln^{a}O_{1.5})₁₋ₓₐ(E^{a}O)ₓₐ)_{ya}-(CuO)_{za1}-(NiO)_{za2}-(CoO)_{za3}-(Fe₂O₃)_{za4}-(Mn₂O₃)_{0.5ya+za5}, where 0 ≤ xa ≤ 0.1, 0 ≤ ya ≤ 0.05, (za1+za2+za3) ≤ 1 and (za4+za5) ≤ 1, in particular formed by a solid solution of metal oxides, wherein Ln^{a} is at least one metal from the group of rare earths and E^{a} is at least one metal from the group of alkaline earth metals.

16. Use in accordance with the seven preceding claims, **characterized in that** the ceramic layer structure (26) manufactured using the layer structure (1) contains chromium in a chemically bound form in an interface region (22).

## Revendications

1. Système de couches, qui est réalisé entre un interconnecteur et une cathode d'une pile à combustible à haute température, l'interconnecteur (2) étant constitué d'un alliage métallique contenant du chrome, et le système de couches (1), à l'état vert, étant formé avec un spinelle pulvérulent, ainsi qu'au moins l'un des oxydes métalliques mentionnés ci-après CuO, NiO, CoOₓ et MnOₓ en tant qu'additif de frittage, et au moins une pérovskite pulvérulente,
du chrome n'étant contenu dans aucun de ces composés chimiques, et
la part de spinelle contenue, avec les oxydes métalliques servant d'additifs de frittage, diminuant du côté dirigé vers l'interconnecteur (2) au côté dirigé vers la cathode (3), et la part de pérovskite diminuant elle aussi du côté dirigé vers la cathode (3) dans la direction de l'interconnecteur (2).

2. Système de couches selon la revendication 1, **caractérisé en ce que** le système de couches est formé d'au moins deux couches partielles (4, 5) ayant des consistances différentes.

3. Système de couches selon la revendication 1 ou 2, **caractérisé en ce qu'**on utilise en tant que pérovskite une pérovskite non stoechiométrique, dans laquelle le site réticulaire A^{p} de la structure cristalline de la pérovskite A^{p}B^{p}O₃ est occupé par au moins un métal du groupe des éléments chimiques La, Sr, Ca et Y, et le site réticulaire B^{p} étant occupé par au moins un métal du groupe des éléments chimiques Mn, Ni, Co et Fe.

4. Système de couches selon l'une des revendications précédentes, **caractérisé en ce qu'**elle contient en tant que spinelle (CuₓₛNi₁₋ₓₛ)_{ys}(Mn_{1-zs}Fe_{zs})₂O₄, avec 0 ≤ xs ≤ 1,0, 0,8 ≤ ys ≤ 1,2, et 0,0 ≤ zs ≤

5. Système de couches selon l'une des revendications précédentes, **caractérisé en ce qu'**elle contient en tant que pérovskite (Ln^{p}₁₋ₓₚE^{p}ₓₚ)_{1-zp}M^{p}O_{3-δ}, avec 0 ≤ xp ≤ 0,35, 0,0 ≤ zp ≤ 0,03, Ln^{p} étant au moins un métal du groupe des terres rares, E^{p} étant au moins un métal du groupe des métaux alcalino-terreux, et M^{p} étant au moins un métal du groupe des métaux de transition ;
δ représentant les lacunes d'oxygène dans le réseau cristallin, qui résultent des valences sur le site réticulaire B^{p} et éventuellement aussi sur le site réticulaire A^{p} de la structure cristalline de la pérovskite.

6. Système de couches selon l'une des revendications précédentes, **caractérisé en ce que** le système de couches (1) présente sur le côté dirigé vers l'interconnecteur (2) ou sur une première couche partielle (4) qui y est disposée, une part de 65 % en masse à 95,9 % en masse de particules de poudre de spinelle, une part de 4 % en masse à 29 % en masse de particules de poudre de l'additif de frittage et une part de 0,1 % en masse à 6 % en masse de particules de poudre de pérovskite.

7. Système de couches selon l'une des revendications précédentes, **caractérisé en ce que** le système de couches présente sur le côté dirigé vers la cathode (3) ou dans une deuxième couche partielle (5) une part de 0,1 % en masse à 45 % en masse de particules de poudre de spinelle, une part de 0,1 % en masse à 0,5 % en masse de particules de poudre de l'additif de frittage et une part de 50 % en masse à 99,8 % en masse de particules de poudre de pérovskite.

8. Système de couches selon l'une des revendications précédentes, **caractérisé en ce que** la zone de la structure de couches (1) immédiatement contiguë à la cathode (3), ou une troisième couche partielle qui y est disposée, est constituée exclusivement de pérovskite.

9. Système de couches selon l'une des revendications précédentes, **caractérisé en ce que** le système de couches (1) contient une pérovskite qui correspond au matériau de la cathode.

10. Utilisation d'un système de couches selon l'une des revendications précédentes pour réaliser une structure de couches céramiques (26) entre un interconnecteur (2) et une cathode (3) d'une pile à combustible à haute température après un frittage, qui est formée d'une phase spinelle et d'au moins une phase pérovskite, la part du spinelle contenu diminuant du côté dirigé vers l'interconnecteur (2) au côté dirigé vers la cathode (3), et la part de pérovskite diminuant elle aussi du côté dirigé vers la cathode (3) dans la direction allant vers le côté dirigé vers l'interconnecteur (2), et la structure de couches (1) présentant dans la zone interfaciale (20), dirigée vers l'interconnecteur (2), et sur une épaisseur d'au moins 10 µM, une porosité ≤ 25 % et/ou un diamètre moyen des pores ≤ 1 µm.

11. Utilisation selon la revendication précédente, **caractérisée en ce que** la porosité de la structure de couches céramiques (26) augmente dans la direction de la cathode (3).

12. Utilisation selon les deux revendications précédentes, **caractérisée en ce que** la zone interfaciale (20) est, dans la direction allant vers la cathode (3), suivie par au moins deux couches partielles (4, 5).

13. Utilisation selon les trois revendications précédentes, **caractérisée en ce que** la phase spinelle est constituée selon la formule (CuₓₛNi₁₋ₓₛ)_{ys}(Mn_{1-zs}Fe_{zs})₂O₄, avec 0 ≤ xs ≤ 1,0, 0,8 ≤ ys ≤ 1,2, et 0,0 ≤ zs ≤ 1,0.

14. Utilisation selon les quatre revendications précédentes, **caractérisée en ce que** la phase pérovskite est constituée d'une pérovskite non stoechiométrique selon la formule (Ln^{p}₁₋ₓₚE^{p}ₓₚ)_{1-zp}M^{p}O_{3-δ}, avec 0 ≤ xp ≤ 0,35, 0,0 ≤ zp ≤ 0,03, dans la phase pérovskite Ln^{p} étant au moins un métal du groupe des terres rares, E^{p} étant au moins un métal du groupe des métaux alcalino-terreux, et M^{p} étant au moins un métal du groupe des métaux de transition ;
δ représentant les lacunes d'oxygène dans le réseau cristallin, qui résultent des valences sur le site réticulaire B^{p} et éventuellement aussi sur le site réticulaire A^{p} de la structure cristalline de la pérovskite.

15. Utilisation selon les cinq revendications précédentes, **caractérisée en ce qu'**une phase oxyde métallique est constituée selon la formule ((Ln^{a}O_{1,5})₁₋ₓₐ(E^{a}O)ₓₐ)_{ya}-(CUO)_{za1}**-**(NiO)_{za2}-(CoO)_{za3}-(Fe₂O₃)_{za4}-(Mn₂O₃)_{0,5ya+za5}, avec 0 ≤ xa ≤ 0,1, 0 ≤ ya ≤ 0,05, (za1+za2+za3) ≤ 1 et (za4+za5) ≤ 1, de préférence sous forme d'une solution solide d'oxydes métalliques, Ln^{a} étant au moins un métal du groupe des terres rares, et E^{a} étant au moins un métal du groupe des métaux alcalino-terreux.

16. Utilisation selon les sept revendications précédentes, **caractérisée en ce que** le système de couches céramiques (26) fabriqué avec le système de couches (1) contient dans une zone interfaciale (22) du chrome sous une forme chimiquement liée.
